# EUROPEAN PATENT APPLICATION

(11) **EP 4 838 189 A1**
(43) Date of publication of application: **11.11.2026**
(21) Application number: 26177138.0
(22) Date of filing: 07.05.2026
(51) Int. Cl.: G01J 3/45, G01J 3/02, G01N 21/35

(54) **METHOD AND SYSTEM FOR ANALYSING SAMPLES USING INTERFEROMETRIC SPECTROMETERS**

(30) Priority: 07.05.2025 US 202519201275
(71) Applicant: Thermo Electron Scientific Instruments LLC, Madison, WI 53711 (US)
(72) Inventor: WILLE, Logan James, Madison (US); LOWRY, Stephen R., Madison (US); GLATZMAIER, Michael James, Maple Grove (US)
(74) Representative: Boult Wade Tennant LLP

(57) **Abstract**

Systems/techniques are provided for facilitating improved spectrum deconvolution for interferometric spectrometers. In various embodiments, a system can access a reference spectrum acquired from a reference sample, calculate one or more deconvolution parameters of a deconvolution model using the reference spectrum and a known spectrum of the reference sample, acquire, via the interferometric spectrometer, a sample spectrum from a sample, wherein the sample is chemically different from the reference sample, and generate a deconvoluted sample spectrum by deconvoluting the acquired sample spectrum with the one or more deconvolution parameters.

## Description

### FIELD OF THE INVENTION

The present description relates generally to methods and systems for processing spectral data, and more particularly, to processing the spectral data acquired from the interferometric spectrometers.

### SUMMARY

The following presents a summary to provide a basic understanding of one or more embodiments. This summary is not intended to identify key or critical elements, or delineate any scope of the particular embodiments or any scope of the claims. Its sole purpose is to present concepts in a simplified form as a prelude to the more detailed description that is presented later. In one or more embodiments described herein, devices, systems, computer-implemented methods, apparatus or computer program products that facilitate improved spectrum deconvolution for interferometric spectrometers are described.

According to one or more embodiments, a system is provided. In various aspects, the system can comprise a processor that can execute computer-executable components stored in a non-transitory computer-readable memory. In various instances, the computer-executable components can comprise an access component that can access an interferometric spectrometer. In various cases, the computer-executable components can comprise a calibration component that can compute at least one fitted value for at least one deconvolution parameter of the interferometric spectrometer, based on a wavenumber-to-wavelength spectrum conversion.

According to one or more embodiments, a computer-implemented method is provided. In various embodiments, the computer-implemented method can comprise accessing, by a device operatively coupled to a processor, an interferometric spectrometer. In various aspects, the computer-implemented method can comprise computing, by the device, at least one fitted value for at least one deconvolution parameter of the interferometric spectrometer, based on a wavenumber-to-wavelength spectrum conversion.

According to one or more embodiments, a computer program product for facilitating spectrum deconvolution for interferometric spectrometers is provided. In various embodiments, the computer program product can comprise a non-transitory computer-readable memory having program instructions embodied therewith. In various aspects, the program instructions can be executable by a processor to cause the processor to access an interferometric spectrometer. In various instances, the program instructions can be executable to cause the processor to compute at least one fitted value for at least one deconvolution parameter of the interferometric spectrometer, based on a wavenumber-to-wavelength spectrum conversion.

According to one or more embodiments, a method is provided. In various aspects, the method can comprise accessing a reference spectrum acquired from a reference sample. In various instances, the method can comprise calculating one or more deconvolution parameters of a deconvolution model using the reference spectrum and a known spectrum of the reference sample. In various cases, the method can comprise acquiring, via the interferometric spectrometer, a sample spectrum from a sample, wherein the sample is chemically different from the reference sample. In various aspects, the method can comprise generating a deconvoluted sample spectrum by deconvoluting the acquired sample spectrum with the one or more deconvolution parameters.

According to one or more embodiments, an interferometric spectrometer is provided. In various aspects, the interferometric spectrometer can acquire a sample spectrum for a sample. In various instances, the interferometric spectrometer can generate a deconvoluted sample spectrum by deconvoluting the acquired sample spectrum with one or more deconvolution parameters of a deconvolution model, wherein the sample is chemically different from a reference sample for which the one or more deconvolution parameters were calculated.

### DESCRIPTION OF THE DRAWINGS

Various embodiments will be readily understood by the following detailed description in conjunction with the accompanying figures. To facilitate this description, like reference numerals designate like structural elements. Embodiments are illustrated by way of example, not by way of limitation, in the figures. The figures are not necessarily drawn to scale.
FIG. 1 illustrates an example, non-limiting block diagram of a scientific instrument module in accordance with various embodiments described herein.
FIG. 2 illustrates an example, non-limiting diagram of an interferometric spectrometer in accordance with various embodiments described herein.

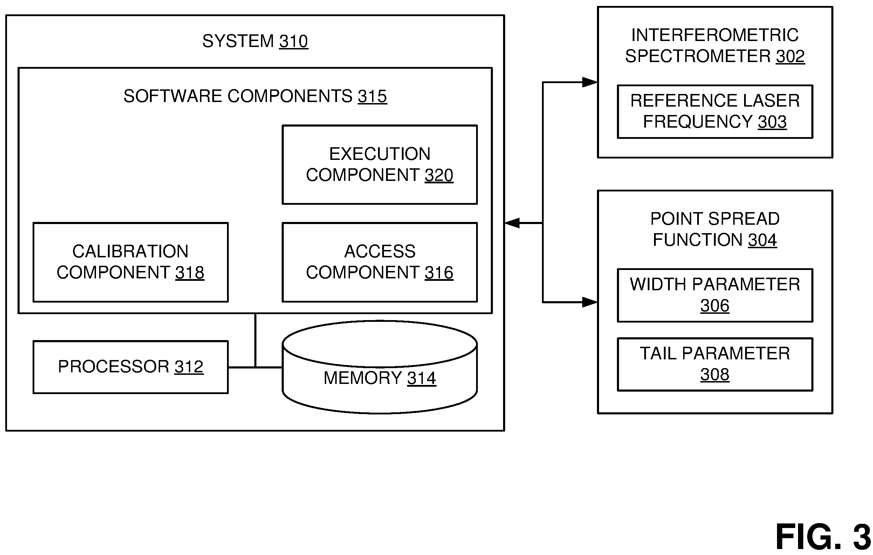

FIG. 3 illustrates a block diagram of an example, non-limiting system that facilitates spectrum deconvolution for interferometric spectrometers in accordance with one or more embodiments described herein.
FIG. 4 illustrates a block diagram of an example, non-limiting system including fitted deconvolution parameter values and a wavenumber-to-wavelength spectrum conversion that facilitates spectrum deconvolution for interferometric spectrometers in accordance with one or more embodiments described herein.
FIGs. 5A and 5B are flowcharts of generating the deconvolution parameters.
FIG. 6 illustrates example, non-limiting block diagrams showing wavenumber-to-wavelength spectrum conversion in accordance with one or more embodiments described herein.
FIG. 7 illustrates an example method for calculating the deconvolution parameters.
FIG. 8 illustrates a block diagram of an example, non-limiting system including a deconvolved wavelength-basis spectrum for a sample in accordance with one or more embodiments described herein.
FIG. 9 illustrates a flow diagram of an example, non-limiting method of measuring a sample using the interferometric spectrometers in accordance with one or more embodiments described herein.
FIGs. 10, 11, 12, and 13 illustrate example, non-limiting experimental results in accordance with one or more embodiments described herein.
FIGs. 14A, 14B and 14C shows example signals from background scan and absorption spectrum of reference sample extracted from the background scan.

### DETAILED DESCRIPTION

The following detailed description is merely illustrative and is not intended to limit embodiments or application/uses of embodiments. Furthermore, there is no intention to be bound by any expressed or implied information presented in the Summary sections or in the Detailed Description section.

One or more embodiments are now described with reference to the drawings, wherein like referenced numerals are used to refer to like elements throughout. In the following description, for purposes of explanation, numerous specific details are set forth in order to provide a more thorough understanding of the one or more embodiments. It is evident, however, in various cases, that the one or more embodiments can be practiced without these specific details.

Various operations can be described as multiple discrete actions or operations in turn, in a manner that is most helpful in understanding the subject matter disclosed herein. However, the order of description should not be construed as to imply that these operations are necessarily order dependent. In particular, these operations can be performed in an order different from the order of presentation. Operations described can be performed in a different order from the described embodiments. Various additional operations can be performed, or described operations can be omitted in additional embodiments.

Although some elements may be referred to in the singular (e.g., "a processing device"), any appropriate elements may be represented by multiple instances of that element, and vice versa. For example, a set of operations described as performed by a processing device may be implemented with different ones of the operations performed by different processing devices. As used herein, the phrase "based on" should be understood to mean "based at least in part on," unless otherwise specified.

An interferometric spectrometer can be considered as a type of scientific instrument that can be deployed in a scientific, laboratory, research, or clinical operational context or setting, so as to determine the chemical composition or make-up of unknown samples or specimens. To facilitate such chemical composition determination, the interferometric spectrometer can comprise a complex arrangement of actuatable parts (e.g., light sources; adjustable apertures, optical lenses or filters; interferometers made up of adjustable mirrors and beam splitters) and sensors (e.g., photodetectors). For instance, an interferometric spectrometer can include an interferometer for generating a modulated beam. By irradiating a sample with a modulated beam or detecting a modulated beam from the sample, signals in the form of an interferogram can be acquired. The acquired interferogram can be processed, such as via a Fourier Transform, to yield a spectrum (e.g., spectrum, or possibly a transmittance spectrum) for the sample. The interferogram can be a time-domain representation of constructive or destructive interference patterns associated with the sample, whereas the spectrum can be a graph showing intensity of light received from (e.g., absorbed by, transmitted through, or emitted from) the sample as a function of wavenumber. In any case, the chemical identity or composition of the sample can be identified by evaluating the spectrum (e.g., different samples can correspond to or otherwise cause the generation of different or unique spectra). The interferometric spectrometer may include a Fourier Transform Infrared (FTIR) or Fourier Transform Raman (FT-Raman) spectrometer.

The interferometric spectrometer can include an aperture for allowing light generated from a source to enter the interferometer. A signal-to-noise ratio of the spectrum can be increased by widening the aperture. However, a larger aperture can also allow off-axis light to enter into the interferometer. The off-axis light can cause the spectrum to contain geometric artifacts, such as shifted or misshapen absorbance peaks. The presence of such geometric artifacts can lead to misidentification of the sample and can thus be considered as undesirable.

One way to address this problem is to apply a deconvolution operation to the acquired spectrum. For example, Huijie Wang, Xiangyun Ma, Yang Wang, Da Chen, Wenliang Chen, and Qifeng Li, "Enhancing the signal-to-noise ratio of FTIR spectrometers by a digital J-Stop," Opt. Express 25, 19077-19082 (2017), which is incorporate herein by reference and for all purposes, describes applying a digital J-stop on a water spectrum based on a Gaussian profile to improve the spectral resolution and increase the signal-to-noise ratio. However, it is not clear how the digital J-stop can be applied to measure a sample with unknown chemical composition.

Herein, methods and systems of imaging a sample with an interferometric spectrometer are disclosed. In particular, a reference spectrum is obtained. One or more deconvolution parameters for deconvoluting the spectra can be calculated by using the reference spectrum and a known spectrum of the reference sample. The one or more deconvolution parameters may be saved for analyzing a sample of interest with chemically different composition from the reference sample. When a sample spectrum of the sample of interest is acquired by the interferometric spectrometer, the deconvolution parameters can be applied to the sample spectrum to obtain the deconvoluted sample spectrum. In this way, a spectrum having high signal-to-noise ratio and high spectral resolution for the sample of interest can be obtained, so as to determine the chemical composition of the sample of interest. The effect of stray light entering the interferometric spectrometer can be reduced or eliminated. The spectrum can be absorbance, transmission, or emittance spectrum. The interferometric spectrometer may be a FTIR or FT-Raman spectroscopy.

In one example, the reference spectrum is acquired from a reference sample of known composition. The reference spectrum may be acquired by the same interferometric spectrometer as the sample spectrum. The reference sample is loaded into the interferometric spectrometer for an in-factory calibration, for example, by inserting a container including the reference sample. As such, the interferometric spectrometer can be calibrated only once with a reference sample, such as water, carbon monoxide, carbon dioxide, to obtain the deconvolution parameters, and these parameters can be saved and later applied to the spectra of samples with various unknown compositions which are scanned by the interferometric spectrometer.

Before measuring a sample of interest, a background scan is performed when no sample is presented in the interferometric spectrometer. The background scan provides background signals caused by the light source and atmosphere. The background signals are removed from the acquired sample spectrum to obtain the sample spectrum. Applicant recognizes that a reference spectrum can also be calculated from the background scan by extracting the absorption spectrum of carbon dioxide or water. In some examples, the reference spectrum can be used to generate the deconvolution parameters. In some examples, the user can use the background scan to re-calibrate an in-factory calibrated interferometric spectrometer.

In some examples, the reference spectrum that is used for calculating the deconvolution parameters is in a wavelength-basis. That is, the reference spectrum can represent the intensities of the signal at various wavelengths. If the obtained reference spectrum is wavenumber-basis (i.e., the reference spectrum represents the intensities of the signal at various wavenumbers), the wavenumber-basis reference spectrum is converted into a wavelength-basis spectrum before calculating the deconvolution parameters.

The present inventor recognized that, by performing a deconvolution operation on a reference spectrum whose independent variable (e.g., abscissa) is wavenumber, calibration would have to be performed with a reference spectrum that has a similar spectral peak as the sample of interest. In other words, in order to image different samples with spectral peaks in a wide spectral range, an independent or separate calibration for each small interval of that wide spectral range would be needed when deconvolving in a wavenumber-basis. In other words, the amount of intensity shifting or intensity shaping that the deconvolution operation performs on the spectrum changes as wavenumber changes. This means that significantly different wavenumber ranges require significantly different deconvolution distribution parameter values in order for geometric artifacts to properly be removed from or reduced in those significantly different wavenumber ranges. For example, suppose that certain deconvolution distribution parameter values are known or found to properly remove geometric artifacts from a spectrum for wavenumbers ranging from 2330 to 2332. Those certain deconvolution distribution parameter values can be considered as becoming progressively worse or inaccurate at removing geometric artifacts from the spectrum for wavenumbers that are progressively farther from that 2330-2332 range (e.g., those certain parameter values can do a moderate job of removing geometric artifacts for wavenumbers near 2200; those certain parameter values can do a poor job of removing geometric artifacts for wavenumbers around 1800; those certain parameter values can do an abysmal job of removing geometric artifacts for wavenumbers below 1000). Accordingly, when given a spectrum that spans a large range (e.g., thousands) of wavenumbers, existing techniques can reliably remove geometric artifacts from that spectrum only if that large range of wavenumbers is segmented into very many narrow intervals (e.g., each narrow interval spanning 5 or fewer wavenumbers) and respective deconvolution distribution parameter values are identified for each narrow interval. This would be highly time-consuming, effort-intensive, and burdensome.

The present inventor recognized that the geometric effect of peak shifting or broadening can be considered as varying linearly with evenly-spaced wavenumber in a collected spectrum. When converting the collected spectrum to an evenly-spaced wavelength-basis, the shifting or broadening effects achieved by deconvolution can become roughly constant, and so the deconvolution can be applied to this converted spectrum with a point-spread-function (or deconvolution model) that is constant across the spectral range. As such, by calculating the deconvolution parameters using the wavelength-basis spectrum, the deconvolution parameters calculated from a single reference sample can be applied to samples with different chemical composition (or different spectral peaks). For example, the method can be applied to a sample spectrum having at least one spectral peak different from the known spectrum of the reference sample. In one example, the known spectrum of the reference sample can have a single spectral peak. Further, the method is applicable to a sample spectrum with spectral peaks that are far away from the known spectrum of the reference sample. For example, the sample may include at least one peak more than 100 wavenumbers away from the spectral peak of the reference sample. For example, a distance between the spectral peak of the reference sample and the at least one spectral peak of the sample spectrum can be greater than any suitable threshold value as measured in an evenly-spaced wavenumber-basis. Accordingly, various embodiments described herein can remove the need to calculate separate deconvolution parameters for multiple segmented spectral intervals.

Various embodiments described herein can involve calculating the deconvolution parameters with a reference spectrum that is wavelength-basis rather than wavenumber-basis. That is, a reference spectrum whose independent variable is wavelength instead of wavenumber. The present inventor realized that, although the geometric effects of a deconvolution operation can be considered as varying linearly with evenly-spaced wavenumber, such geometric effects can instead be considered as being constant with evenly-spaced wavelength (e.g., due to the fact that wavelength is equal to the reciprocal of wavenumber). In other words, the amount of intensity shifting or shaping that a deconvolution operation performs on a spectrum whose independent variable is wavelength does not appreciably change as wavelength changes (provided that the spectrum is evenly-spaced in terms of wavelength). So, when given a spectrum that spans a large range of wavenumbers, that spectrum can be converted or translated into a wavelength-basis, and a single set of deconvolution parameter values can be identified to properly or reliably remove geometric artifacts from the entirety of the converted or translated spectrum. Note how this eliminates the need to segment the large range of wavenumbers into very many narrow intervals that each requires its own respective set of deconvolution parameter values.

In some examples, the deconvolution model utilized by various embodiments described herein can be a one-sided student-t distribution. This can be advantageous over using a Gaussian distribution as the deconvolution model. This is because, although a Gaussian distribution does an adequate job of correcting peak shifts in spectra, a Gaussian distribution often does an inadequate job of correcting peak shapes. For example, suppose that a particular peak is misshapen and located at an incorrect wavenumber within a particular spectrum. Furthermore, suppose that an appropriate standard deviation parameter value has been identified for whatever narrow wavenumber interval that contains the particular peak. When deconvolution is performed on the particular spectrum using that appropriate standard deviation parameter value, the particular peak can be converted into a new peak. Because such deconvolution is performed via a Gaussian, that new peak can be located nearer to a correct wavenumber, but that new peak can still be misshapen (e.g., can exhibit the same or different shape artifacts as the particular peak). Accordingly, deconvolution via Gaussians can be considered as leaving vestigial shape artifacts in spectra. By using a one-sided student-t distribution, the spectral peak shape can be better tuned. Various embodiments described herein can involve performing spectrum deconvolution via a one-sided student-t distribution rather than via a Gaussian distribution. As mentioned above, a Gaussian distribution can be defined by a width parameter (e.g., sometimes referred to as a standard deviation parameter). In contrast, a one-sided student-t distribution can be defined by a width parameter and a tail parameter (e.g., sometimes referred to as a degree-of-freedom parameter). The present inventor realized that, although a deconvolution using a one-sided Gaussian distribution can produce vestigial or leftover shape artifacts, a deconvolution using a one-sided student-t distribution can reduce or eliminate such vestigial or leftover shape artifacts, due to implementation of the tail parameter. In other words, the tail parameter can be considered as an additional configurable knob of a deconvolution operation that can be adjusted so as to account for shape defects that would otherwise be missed or poorly handled by a one-sided Gaussian distribution.

In various embodiments, the one or more deconvolution parameters can further include a spectral shift parameter. An interferometric spectrometer includes a reference laser for interferometer alignment, wavenumber calibration, and/or interferogram sampling. Some of the reference lasers, such as the Vertical-Cavity Surface-Emitting Laser (VCSEL), are not stable, and may need to be calibrated to ensure the accuracy, precision, and reliability of the instrument. The reference laser may be calibrated by matching the spectral peak location measured from a reference sample with the known peak location of the reference sample. The present inventor realized that deconvolution can have the inadvertent side-effect of undesirably compounding with the shift-correction that was obtained via reference laser calibration. Because of this compounding, deconvolution performed according to existing techniques can mistakenly shift peaks past their respective correct wavenumbers.

This can be ameliorated by performing a deconvolution operation based not just on the parameters (e.g., width, tail) that define a deconvolution model or a point spread function (e.g., student-t), but also based on another parameter (referred to as an spectral shift parameter or alternatively as a laser parameter) that accounts for spectral shift caused by the deconvolution process. As mentioned above, the interferometric spectrometer can have a built-in reference laser as a constituent component, that built-in reference laser can have been initially calibrated so as to reduce the amount of peak shift artifacts produced by the reference laser. The reference spectrum can be generated using the calibrated reference laser. A spectral shift parameter can then be determined based on the shift of spectral peak of the deconvoluted reference spectrum from the know spectral peak of the reference sample.

In one example, the reference laser frequency is calibrated using a first reference sample, and the spectral shift is calibrated using a second reference sample. The reference spectrum of the second reference sample is generated by applying the calibrated reference laser frequency. The calibration of the reference laser frequency is a different process from generating the deconvolution parameters.

In some examples, the reference laser frequency may be recalibrated over the life-time of the interferometric spectrometer, for example, to compensate for the laser frequency drift over time. For calibrating the reference laser, the first reference sample is loaded, and a first reference sample spectrum is acquired, for example, using a large aperture. The reference laser frequency is then re-calibrated using the first reference sample spectrum.

Thus, various embodiments described herein can be considered as an improved technique for increasing the signal quality of the interferometric spectrometers.

Various embodiments described herein can be considered as a computerized tool (e.g., any suitable combination of computer-executable hardware or computer-executable software) that can be electronically installed on or otherwise with respect to an interferometric spectrometer (e.g., can be installed on a computerized workstation associated with that interferometric spectrometer) and that can facilitate improved signal quality for that interferometric spectrometer. In various aspects, such computerized tool can comprise an access component, a calibration component, or an execution component.

In some examples, the deconvolution model is defined by parameters including a width parameter and a tail parameter. In various instances, the width parameter can be a real-valued scalar whose magnitude controls how wide the deconvolution model is. In various cases, the tail parameter can be a real-valued scalar whose magnitude controls how heavy a tail of the deconvolution model is. In various embodiments, the deconvolution model is a one-sided student-t distribution.

In various embodiments, the access component of the computerized tool can electronically access the interferometric spectrometer. That is, the access component can electronically interface with the interferometric spectrometer, such that any other components of the computerized tool can electronically interact with (e.g., send electronic commands to, read electronic signals from) the interferometric spectrometer. Likewise, the access component can electronically access the deconvolution parameters. So, the access component can receive or retrieve the deconvolution parameters, such that any other components of the computerized tool can electronically utilize the deconvolution parameters for computational or processing purposes (e.g., deconvolute the sample spectrum).

In various embodiments, the calibration component of the computerized tool can electronically compute a fitted width value for the width parameter, a fitted tail value for the tail parameter, and a fitted spectral shift parameter, based on a reference spectrum and the known spectrum of the reference sample, wherein both spectra are wavelength based.

In one example, the interferometric spectrometer can be loaded with a reference sample. In various aspects, the reference sample can be any suitable solid, liquid, or gaseous collection of matter for which ground-truth spectra are known or otherwise available. In various instances, the calibration component can electronically instruct (e.g., through or via the access component) the interferometric spectrometer to scan the reference sample. In various cases, such scanning can yield or produce a wavenumber-basis spectrum. In various aspects, the wavenumber-basis spectrum can be a plot of value as a function of wavenumber. In other words, the wavenumber-basis spectrum can be a plurality of tuples, each tuple containing an intensity value and a respective wavenumber at which that absorbance value was recorded by the interferometric spectrometer. In various instances, the wavenumber-basis spectrum can exhibit geometric artifacts. As a non-limiting example, because the reference sample can correspond to known or available ground-truth spectra, it can be expected that the wavenumber-basis spectrum show particularly-shaped peaks at particular wavenumbers. However, due to off-axis beams within the interferometric spectrometer, the wavenumber-basis spectrum can, in actuality, fail to show those particularly-shaped peaks at those particular wavenumbers (e.g., whatever peaks are actually shown by the wavenumber-basis spectrum can be located at incorrect wavenumbers or can be oddly shaped).

In various aspects, the calibration component can apply the wavenumber-to-wavelength spectrum conversion to the wavenumber-basis reference spectrum, and such application can yield a wavelength-basis spectrum. More specifically, the wavelength-basis reference spectrum can, as mentioned above, be a plurality of tuples, with each tuple indicating a respective intensity value and wavenumber. In various instances, the wavenumber-to-wavelength spectrum conversion can involve computing a reciprocal of the wavenumber indicated by each tuple of the wavenumber-basis spectrum. Note that the abscissa of the wavenumber-basis spectrum can be evenly-spaced by default. In other words, the specific wavenumbers indicated by the tuples that make up the wavenumber-basis spectrum can be linearly distributed across whatever wavenumber domain or interval is spanned by the wavenumber-basis spectrum. Because wavelength is equal to the reciprocal of wavenumber, the result of reciprocation can be an intermediate spectrum whose abscissa is wavelength. In other words, the intermediate spectrum can be a second plurality of tuples, with each of those tuples indicating a respective intensity value and wavelength (rather than a respective intensity value and wavenumber). However, note that the abscissa of the intermediate spectrum can be unevenly-spaced. That is, the specific wavelengths indicated by those second tuples can be nonlinearly distributed across whatever wavelength domain or interval is spanned by the intermediate spectrum. So, in various aspects, the wavenumber-to-wavelength spectrum conversion can involve fitting a spline (or any other suitable curve) to the intermediate spectrum via any suitable fitting technique (e.g., least sum of squares). Such fitted spline can be considered as correlating or mapping wavelength to intensity value in a continuous, rather than discrete, fashion. In various instances, the wavenumber-to-wavelength spectrum conversion can include selecting any suitable plurality of linearly-distributed wavelengths from the wavelength domain or interval spanned by the intermediate spectrum. In various cases, the wavenumber-to-wavelength spectrum conversion can include identifying, via the fitted spline, a respective absorbance value for each of the plurality of evenly-spaced wavelengths. In other words, although the intermediate spectrum is discrete and thus does not itself indicate what intensity values belong to those evenly-spaced wavelengths, those intensity values can be interpolated via the fitted spline. This can yield a third plurality of tuples, with each of those tuples indicating a respective interpolated intensity value and wavelength, and with those tuples being evenly-spaced or linearly-distributed with respect to each other in terms of wavelength. That third plurality of tuples can be collectively considered as forming the wavelength-basis spectrum.

Note that the wavelength-basis reference spectrum can be considered as a reformatted, reorganized, rearranged, or morphed version of the wavenumber-basis spectrum. Thus, whatever geometric artifacts are present in the wavenumber-basis spectrum can be manifested in some fashion within the wavelength-basis spectrum.

In various aspects, the calibration component can determine the deconvolution model (or the point spread function) for deconvoluting the sample spectrum. In some examples, the deconvolution model includes a width parameter and a tail parameter, which characterize the width and the tail shape of the deconvolution model respectively. In one example, the deconvolution model has the one-sided student-t distribution. The width parameter and the tail parameter can be determined based on the known spectrum of the reference sample. The known spectrum may be wavelength-basis. In some examples, the width and tail parameters can be determined by fitting the parameters so that the deconvolution model resembles to the known spectrum.

In various cases, the calibration component can perform a deconvolution operation on the wavelength-basis spectrum, where such deconvolution operation utilizes as an input argument the one-sided student-t distribution defined by the random width parameter and the random tail parameter. In other words, the random width parameter and the random tail parameter can be considered as causing the one-sided student-t distribution to exhibit some random shape, and the calibration component can treat that randomly-shaped one-sided student-t distribution as a kernel with which to deconvolve, and thereby geometrically alter, the wavelength-basis spectrum. It should be appreciated that any suitable deconvolution technique or deconvolution algorithm can be implemented by the calibration component (e.g., Richardson-Lucy, Landweber). In various aspects, the result of such deconvolution can be referred to as a deconvolved wavelength-basis spectrum.

In one example, the reference sample can have a known or otherwise available ground-truth spectrum. In various instances, such ground-truth spectrum can be formatted in a wavelength-basis (e.g., via the wavenumber-to-wavelength spectrum conversion, if necessary). In any case, the ground-truth spectrum can be considered as showing absorbance value of the reference sample without geometric artifacts (e.g., without misplaced or misshapen peaks). In various aspects, the calibration component can compute a cosine similarity between the ground-truth spectrum and the deconvolved, scaled spectrum. In various instances, the calibration component can incrementally update the random width parameter, the random tail parameter, or the spectral shift parameter using any suitable optimization technique (e.g., stochastic gradient ascent, Nelder-Mead) that is driven by the cosine similarity. Such incremental update can yield an updated width value, an updated tail value, or an updated spectral shift value. In various cases, the calibration component can reperform deconvolution and spectral shift on the original wavelength-basis spectrum using the updated width value, the updated tail value, or the updated spectral shift value, thereby producing an updated version of the deconvolved, scaled wavelength-basis spectrum. In various aspects, the calibration component can repeat or cycle through such actions (e.g., deconvolution, spectral shift, cosine similarity computation, incremental update), with each iteration causing the deconvolved, scaled wavelength-basis spectrum to become progressively more similar to the ground-truth wavelength-basis spectrum. In various instances, the calibration component can continue such repetitions until the cosine similarity exceeds any suitable threshold value. At such point, the most recently updated width value, the most recently updated tail value, and the most recently updated spectral shift value can be respectively referred to as the fitted width value, the fitted tail value, and the fitted spectral shift value. In any case, the fitted width value, the fitted tail value, and the fitted spectral shift value can be considered as the specific deconvolution/scaling parameter values which correctly, accurately, or properly remove misplaced or misshapen peaks from the original wavelength-basis spectrum.

The present inventor realized that the deconvolution/scaling efficacy of such fitted values do not vary with wavelength or with sample composition. Accordingly, for any spectrum that is generated or captured by the interferometric spectrometer for any sample using the same operational settings (e.g., same adjustable aperture size, same optical path lengths, same scanning resolution) that were used for the reference sample, the fitted width value, the fitted tail value, and the fitted spectral shift value can be leveraged to correctly or accurately remove geometric artifacts from those spectra. In various cases, the execution component of the computerized tool can facilitate such removal of geometric artifacts.

As a non-limiting example, suppose that the reference sample is removed from the interferometric spectrometer and replaced with a desired sample (or sample of interest) that is different from the reference sample. In various aspects, the execution component can (e.g., through or via the access component) cause the interferometric spectrometer to perform a scan on the desired sample, thereby yielding a wavenumber-basis spectrum for the desired sample. Note that such wavenumber-basis spectrum might contain geometric artifacts. In various instances, the execution component can perform on that wavenumber-basis spectrum the wavenumber-to-wavelength spectrum conversion, thereby yielding a wavelength-basis spectrum. In various cases, the execution component can perform deconvolution and spectral shift on that wavelength-basis spectrum, using the fitted width value, the fitted tail value, and the fitted spectral shift value. This can yield a deconvolved, scaled wavelength-basis spectrum for the desired sample that is substantively equivalent to the above-mentioned wavelength-basis spectrum but that lacks whatever geometric artifacts might be present in the above-mentioned wavelength-basis spectrum. In some cases, the execution component can render on any suitable computer screen, or transmit to any other suitable computing device, that deconvolved, scaled wavelength-basis spectrum. In other cases, the execution component can convert that deconvolved, scaled wavelength-basis spectrum back to a wavenumber-basis and can render on any suitable computer screen, or transmit to any other suitable computing device, that deconvolved, scaled wavenumber-basis spectrum.

In any case, various embodiments described herein can be considered as facilitating improved spectrum deconvolution for interferometric spectrometers.

Various embodiments described herein can be employed to use hardware or software to solve problems that are highly technical in nature (e.g., to facilitate improved spectrum deconvolution for interferometric spectrometers), that are not abstract and that cannot be performed as a set of mental acts by a human. Further, some of the processes performed can be performed by a specialized computer (e.g., interferometric spectrometer) for carrying out defined acts related to spectrum deconvolution.

For example, such defined acts can include: accessing, by a device operatively coupled to a processor, an interferometric spectrometer; and computing, by the device, at least one fitted value for at least one deconvolution parameter of the interferometric spectrometer, based on a wavenumber-to-wavelength spectrum conversion. In various aspects, the computing the at least one fitted value can include: causing, by the device, the interferometric spectrometer to scan a reference sample, thereby yielding a first wavenumber-basis spectrum for the reference sample; translating, by the device, the first wavenumber-basis spectrum into a first wavelength-basis spectrum for the reference sample; deconvolving, by the device, the first wavelength-basis spectrum with at least one random value for the at least one deconvolution parameter, thereby yielding a first deconvolved wavelength-basis spectrum for the reference sample; and iteratively updating, by the device, the at least one random value until a similarity between the first deconvolved wavelength-basis spectrum and a ground-truth spectrum associated with the reference sample satisfies a threshold.

Such defined acts are inherently computerized. Indeed, interferometric spectrometers are highly-technical computerized devices comprising specific computerized hardware (e.g., light emitters, adjustable apertures, adjustable mirrors, beamsplitters, photodetectors). Neither interferometric spectrometers nor the operations that they perform can be implemented by the human mind, or by a human with pen and paper, in any reasonable or practicable way without computers (e.g., neither the human mind nor a human with pen and paper can emit, split, or recombine light beams so as to generate spectra; neither the human mind nor a human with pen and paper can remove misshapen or misplaced peaks from a spectrum).

Moreover, various embodiments described herein can integrate into a practical application various teachings relating to interferometric spectrometry. As explained above, an interferometric spectrometer can generate a spectrum for a sample, and evaluation or analysis of that spectrum can lead to identification of the chemical composition of the sample. However, the sample can be misidentified if the spectrum contains geometric artifacts (e.g., wrongly-positioned or wrongly-shaped peaks) caused by off-axis light beams within the interferometric spectrometer (e.g., such off-axis light beams can become more prevalent as an adjustable aperture of the interferometric spectrometer becomes more open). Such geometric artifacts can be removed or reduced by performing a deconvolution operation on the spectrum. The present inventor recognized at least three shortcomings of existing techniques that facilitate such deconvolution.

First, existing techniques are computationally expensive. Specifically, existing techniques deconvolve spectra in a wavenumber-basis, due to the established, state-of-the-art teaching that representing absorbance value as a function of wavenumber promotes ease of interpretation and processing. However, the present inventor realized that the geometric effects performed by a deconvolution operation vary with wavenumber. Accordingly, if it is desired to remove geometric artifacts from a spectrum that spans a large range of wavenumbers, existing techniques can facilitate such removal only by segmenting that large range of wavenumbers into a multitude of narrow intervals and independently deconvolving (e.g., using unique deconvolution parameter values) the spectrum on each narrow interval.

Second, existing techniques often produce some geometric artifacts of their own. Specifically, existing techniques deconvolve spectra using a Gaussian distribution, which can be defined by a width parameter. The present inventor realized that, although deconvolution that utilizes a Gaussian distribution can correct with adequate accuracy misplaced peaks in a spectrum, such deconvolution often has trouble correcting misshapen peaks in the spectrum. In other words, even after a spectrum spanning an appropriately narrow wavenumber interval is deconvolved using a Gaussian distribution, the resulting deconvolved spectrum will often have peaks whose leading or trailing edges are erroneously shaped (e.g., too shallow or heavy).

Various embodiments described herein can help to ameliorate such technical problems by facilitating improved spectra deconvolution for interferometric spectrometers. In other words, the present inventor devised various embodiments described herein so as to address or resolve the three above-mentioned disadvantages that plague existing techniques.

First, the present inventor realized that the computational efficiency of spectrum deconvolution can be increased by performing deconvolution in a wavelength-basis rather than in a wavenumber-basis. This is because, as the present inventor recognized, the geometric effects of a deconvolution operation vary with wavenumber but are approximately constant with wavelength. Accordingly, when given a spectrum that spans a large range of wavenumbers, various embodiments described herein can involve translating or converting that spectrum into a wavelength-basis and then deconvolving that translated or converted spectrum. In this way, deconvolution need only be performed once for the entire spectrum. In other words, there is no need to break the large interval of wavenumbers into a multitude of narrow intervals and then deconvolve the spectrum separately or independently on each narrow interval.

Second, the present inventor realized that the shape-correcting effects of a deconvolution operation can be improved by utilizing a one-sided student-t distribution rather than a Gaussian distribution. This is because a one-sided student-t distribution is defined not just by a width parameter (like a Gaussian distribution) but also by a tail parameter (unlike a Gaussian distribution). In other words, the tail parameter can be considered as an additional degree of freedom that allows for the correction of leading-edge or trailing-edge artifacts that would otherwise be missed or mangled by a Gaussian distribution.

The counterintuitive character of various embodiments described herein must be emphasized. Indeed, the field of interferometric spectrometry teaches that processing, and thus deconvolving, spectra is best and most efficiently performed in a wavenumber-basis (e.g., such that wavenumber is the independent variable in spectra). Various embodiments described herein completely contravene this established teaching by instead deconvolving spectra in a wavelength-basis (e.g., such that wavelength is the independent variable in spectra). Stated differently, the field of interferometric spectrometry emphasizes the superiority of formatting and manipulating spectra in a wavenumber-basis, and so a person of ordinary skill in the art would not even have entertained the idea of deconvolving spectra in a wavelength-basis. Even if a person of ordinary skill in the art who wanted to improve spectra deconvolution did somehow consider the possibility of performing such deconvolution in a wavelength-basis, they would have swiftly dismissed such possibility as being unfruitful or a step in the wrong direction, given the commonly-accepted principle that wavenumber-basis is superior for spectral processing.

For at least these reasons, various embodiments described herein can be considered as a concrete and tangible technical improvement in the field of interferometric spectrometry. Accordingly, various embodiments described herein certainly qualify as useful and practical applications of computers.

Furthermore, various embodiments described herein can control real-world tangible devices based on the disclosed teachings. For example, various embodiments described herein can electronically activate, deactivate, or otherwise actuate real-world hardware (e.g., light sources) of real-world scientific instruments (e.g., interferometric spectrometers).

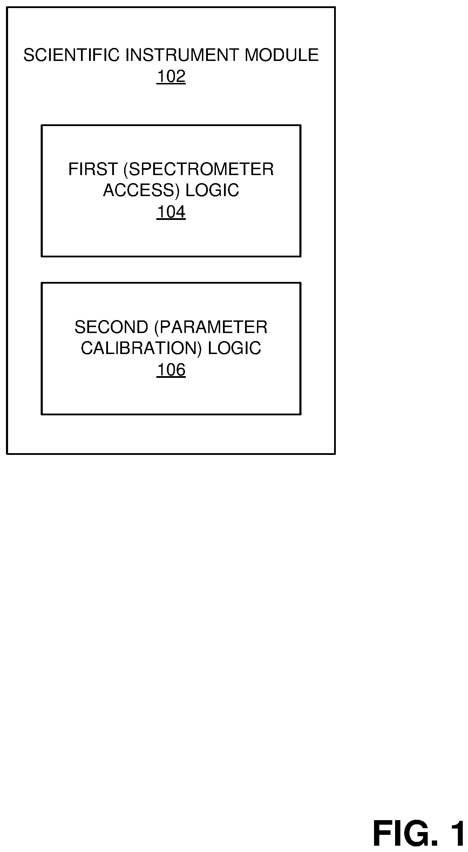

FIG. 1 illustrates an example, non-limiting block diagram of a scientific instrument module 102 in accordance with various embodiments described herein.

In various embodiments, the scientific instrument module 102 can be implemented by circuitry (e.g., including electrical or optical components), such as a programmed computing device. Logic of the scientific instrument module 102 can be included in a single computing device or can be distributed across multiple computing devices that are in communication with each other as appropriate. Examples of computing devices that may, singly or in combination, implement the scientific instrument module 102 are discussed herein with reference to FIG. 15, and examples of systems or networks of interconnected computing devices, in which the scientific instrument module 102 may be implemented across one or more of the computing devices, are discussed herein with reference to FIG. 16.

The scientific instrument module 102 can include first logic 104 and second logic 106. As used herein, the term "logic" can include an apparatus that is to perform a set of operations associated with the logic. For example, any of the logic elements included in the scientific instrument module 102 can be implemented by one or more computing devices programmed with instructions to cause one or more processing devices of the computing devices to perform the associated set of operations. In a particular embodiment, a logic element may include one or more non-transitory computer-readable media having instructions thereon that, when executed by one or more processing devices of one or more computing devices, cause the one or more computing devices to perform the associated set of operations. As used herein, the term "module" can refer to a collection of one or more logic elements that, together, perform a function associated with the module. Different ones of the logic elements in a module may take the same form or may take different forms. For example, some logic in a module may be implemented by a programmed general-purpose processing device, while other logic in a module may be implemented by an application-specific integrated circuit (ASIC). In another example, different ones of the logic elements in a module may be associated with different sets of instructions executed by one or more processing devices. A module can omit one or more of the logic elements depicted in the associated drawings; for example, a module may include a subset of the logic elements depicted in the associated drawings when that module is to perform a subset of the operations discussed herein with reference to that module.

In various embodiments, there can be a scientific instrument corresponding to the scientific instrument module 102. In various aspects, the scientific instrument can be any suitable computerized device that can electronically measure some scientifically-relevant, clinically-relevant, or research-relevant characteristic, property, or attribute of an analytical sample (e.g., of a known or unknown mixture, compound, or collection of matter). As a non-limiting example, the scientific instrument can be an interferometric spectrometer. In such case, the scientific instrument can measure or capture spectra of the analytical sample.

In various embodiments, the first logic 104 can electronically access or otherwise establish electronic communication with the scientific instrument.

In various embodiments, the second logic 106 can compute at least one fitted value for at least one deconvolution parameter of the scientific instrument, based on a wavenumber-to-wavelength spectrum conversion. More specifically, the second logic 106 can cause the scientific instrument to scan some reference sample. Such scanning can yield a wavenumber-basis spectrum for the reference sample, which spectrum can include geometric defects due to off-axis light beams within the scientific instrument. In various aspects, the second logic 106 can convert or translate that wavenumber-basis spectrum into a wavelength-basis spectrum, by leveraging the fact that wavelength is equal to the reciprocal of wavenumber. In various instances, the second logic 106 can randomly initialize the at least one deconvolution parameter and then deconvolve the wavelength-basis spectrum using that at least one randomly-initialized value. Such deconvolution can yield a deconvolved wavelength-basis spectrum. Because the at least one deconvolution parameter was randomly initialized, the deconvolved wavelength-basis spectrum can contain geometric defects notwithstanding having already undergone a deconvolution operation. In various cases, the second logic 106 can compute a cosine similarity between the deconvolved wavelength-basis spectrum and a ground-truth spectrum that is known or deemed to correspond to the reference sample and to be devoid of geometric artifacts. In various aspects, the second logic 106 can incrementally update the randomly-initialized values of the at least one deconvolutional parameter, by performing any suitable optimization algorithm (e.g., backpropagation) that is driven by the cosine similarity. In various instances, the second logic 106 can recompute the deconvolved wavelength-basis spectrum using the updated value of the at least one deconvolution parameter. In various cases, the second logic 106 can repeat these actions until the cosine similarity is below any suitable threshold. At such point, the final or most recently computed values of the at least one deconvolution parameter can be considered as having successfully removed all (or at least a sufficient amount of) the geometric defects that are present in the wavelength-basis spectrum. Thus, such final or most recently computed values can be referred to as fitted values. In various aspects, if the reference sample is ever replaced in the scientific instrument with desired samples for which ground-truth spectra are not available, the second logic 106 can cause the scientific instrument to scan those desired samples and can remove any geometric defects in resultant spectra for those desired samples by deconvolving those resultant spectra with the fitted values of the at least one deconvolution parameter.

Accordingly, the scientific instrument module 102 can facilitate spectra deconvolution.

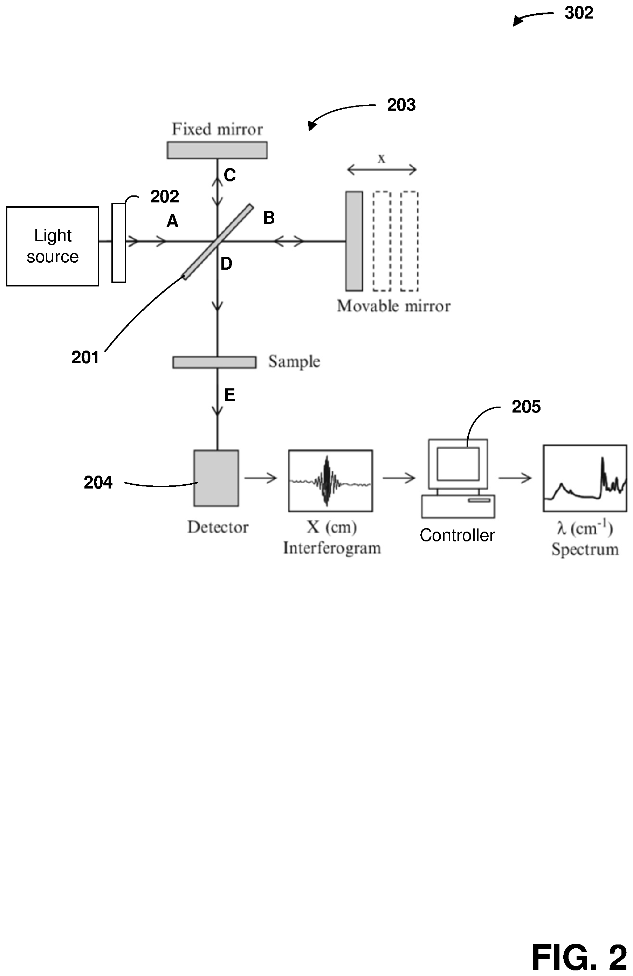

FIG. 2 illustrates a block diagram of an example interferometric spectrometer 302. In various aspects, the interferometric spectrometer 302 can be constructed, composed, or otherwise made up of any suitable constituent hardware for generating, capturing, or otherwise measuring spectra of analytical samples. As a non-limiting example, the interferometric spectrometer 302 can include any suitable light source (e.g., globar light source, Nernst glower, tungsten-halogen lamp, deuterium lamp, Raman laser, any other suitable type of laser), any suitable adjustable or non-adjustable aperture 202 (e.g., iris aperture that can be controllably opened or closed; fixed aperture) positioned upstream of an infrared (IR) light source for limiting the light from the light source. The aperture may also be referred to as J-stop. The interferometer 203 may include any suitable beamsplitter 201 (e.g., cube beamsplitter, plate beamsplitter, pellicle beamsplitter, Glan-Taylor beamsplitter, dielectric beamsplitter), and any suitable adjustable mirrors (e.g., motor-operated flat mirrors that can be controllably translated or tilted, motor-operated retroreflector mirrors that can be controllably translated or tilted, motor-operated spherical mirrors that can be controllably translated or tilted). The interferometric spectrometer further includes any suitable photodetectors 204 (e.g., MCT (Mercury Cadmium Telluride), FPA (Focal Plane Array) Detectors) for detecting modulated light from the sample. A controller 206 may include a processor and non-transitory memories for storing computer readable instructions. By executing the instructions in the processor, the controller may generate a spectrum based on the acquired spectrum. The controller also controls various components of interferometric spectrometer to implement the various methods disclosed herein.. As a non-limiting example, the interferometric spectrometer 302 can be a Fourier Transform Infrared (FTIR) spectrometer or a Fourier Transform Raman (FT-Raman) spectrometer.

In various instances, the aperture 202 can act as an opaque or non-transparent gate that permits the light source to emit light toward the other constituent components of the interferometric spectrometer 302. In various cases, the light source can emit a light beam A through the aperture 202. In various instances, the light beam A can have, possess, or otherwise exhibit any suitable electromagnetic characteristics (e.g., any suitable wavelength, any suitable frequency, any suitable power level or intensity). In various aspects, the beamsplitter 201 can be physically positioned or located in or along the path of the light beam A. Accordingly, the light beam A can strike or otherwise impact the beamsplitter 201. In various aspects, the beamsplitter 201 can split the light beam A into two separate beams: a light beam B and a light beam C. In various instances, the light beam B can be whatever portion of the light beam A that passes, propagates, or is transmitted through the beamsplitter 201, such that the light beam B is parallel (or otherwise within any suitable threshold margin of being parallel) to the light beam A. In various cases, the light beam C can be whatever portion of the light beam A that is reflected by the beamsplitter 201, such that the light beam C is orthogonal (or otherwise within any suitable threshold margin of being orthogonal) to the light beam A. In various aspects, the light beam B can travel a first distance before striking or impacting a first adjustable mirror that reflects the light beam B back toward the beamsplitter 201. Similarly, the light beam C can travel a second distance (which can be different from the first distance) before striking or impacting a fixed mirror (or a second adjustable mirror) that reflects the light beam C back toward the beamsplitter 201. In various instances, the beamsplitter 201 can recombine the reflected versions of the light beam B and the light beam C, thereby yielding a light beam D. Note that, since the first and second distances can be different, the reflected versions of the light beam B and the light beam C can be out-of-phase with each other. So, the electromagnetic characteristics of the light beam D can be the result of constructive or destructive interference between the reflected versions of the light beam B and the light beam C. In various instances, if the interferometric spectrometer 302 is loaded with a given sample that is to be scanned, that given sample can be physically positioned or located in or along the path of the light beam D. So, the light beam D can strike or otherwise impact the given sample. In various aspects, at least some portion of the light beam D can pass, propagate, or otherwise be transmitted through the given sample; such portion can be referred to as a light beam E. In various instances, the electromagnetic characteristics of the light beam E can be different from those of the light beam D and can uniquely depend upon the chemical composition of the given sample. In any case, the photodetectors 204 can be physically positioned or located such that they are struck or impacted by the light beam E. In various aspects, the electronic data recorded or registered by the photodetectors 204 can be considered as an interferogram (e.g., time-domain data) of the given sample. In various instances, the interferometric spectrometer 302 (or a computerized workstation associated with the interferometric spectrometer 302) can apply a Fourier transform to the interferogram, thereby yielding a spectrum (e.g., spectral-domain data) of the given sample. In various cases, the arrangement or shapes of peaks shown in the spectrum can uniquely correspond to or otherwise be associated with the chemical composition of the given sample. In other words, the chemical composition of the given sample can be identified by evaluating or analyzing the spectrum. In this way, the interferometric spectrometer 302 can be leveraged to identify chemical compositions of desired samples.

It should be understood or otherwise appreciated that any suitable optical lenses (e.g., collimating lenses, focusing lenses, aspheric lenses) can be positioned or located along any suitable optical paths within the interferometric spectrometer 302.

In various aspects, the interferometric spectrometer 302 can have or include a reference laser, which is separate from the light source. In various instances, the reference laser can serve as a baseline signal for synchronizing the actuation timing of other constituent components of the interferometric spectrometer 302 or for otherwise promoting the accurate or precise performance of other constituent components of the interferometric spectrometer 302.

In various cases, a larger aperture 202 or configuring the aperture to a more open setting can increase a signal-to-noise ratio of spectra produced by the interferometric spectrometer 302. This can be desirable. However, that more open setting can also cause more severe off-axis light beams to be propagated, split, reflected, recombined, and recorded within the interferometric spectrometer 302, and such off-axis light beams can manifest as misplaced or misshapen peaks in spectra produced by the interferometric spectrometer 302. This can be undesirable. In some examples, the frequency of the reference laser can be tuned or calibrated by matching the measured spectrum from a reference sample (such as carbon dioxide) with the known spectrum of the reference sample. The deconvolution process can introduce additional spectral shift. As such, spectral shift parameter is determined and applied in the deconvolution process to remove the additional spectral shift.

In various cases, it can be desired to perform deconvolutions on the acquired sample spectra produced by the interferometric spectrometer 302 so as to further reduce geometric artifacts.

In various aspects, the point spread function 304 (sometimes referred to as a deconvolution model) can, in various aspects, be a one-sided student-t distribution whose shape is governed by a width parameter 306 and a tail parameter 308. In various instances, the width parameter 306 can be a real, positive scalar whose magnitude can control how wide (e.g., full width half minimum (FWHM)) a peak of the point spread function 304 is. In some cases, the width parameter 306 can be considered as akin to a standard deviation of the one-sided student-t distribution. In contrast, the tail parameter 308 can be a real, positive scalar whose magnitude can control how heavy, long, or pronounced a tail of the point spread function 304 is. As a non-limiting example, the point spread function 304 can be given by the following formula: $f \left(x\right) = \frac{1}{w \sqrt{ν} B \left(\frac{1}{2}, \frac{ν}{2}\right)} {\left(1+\frac{{\left(\frac{x}{w}\right)}^{2}}{ν}\right)}^{- \frac{ν + 1}{2}}$ where x represents an independent variable of the point spread function 304, where *f*(*x*) represents the value of the point spread function 304 at *x,* wherein B represents the beta function having input arguments $\frac{1}{2}$ and $\frac{ν}{2}$, where w represents the width parameter 306, and where v represents the tail parameter 308.

In various aspects, the system 310 can comprise a processor 312 (e.g., computer processing unit, microprocessor) and a non-transitory computer-readable memory 314 that is operably or operatively or communicatively connected or coupled to the processor 312. System 310 may be implemented as a controller 205. The non-transitory computer-readable memory 314 can store computer-executable instructions which, upon execution by the processor 312, can cause the processor 312 or other components of the system 310 (e.g., access component 316, calibration component 318, execution component 320) to perform one or more acts. In various embodiments, the non-transitory computer-readable memory 314 can store computer-executable components (e.g., access component 316, calibration component 318, execution component 320), and the processor 312 can execute the computer-executable components.

In various embodiments, the system 310 can have or include an access component 316. In various aspects, the access component 316 can be electronically coupled or integrated to or with the interferometric spectrometer 302 or the point spread function 304 via any suitable wired or wireless electronic connections. So, in various instances, the access component 316 can electronically access the interferometric spectrometer 302. That is, the access component 316 can electronically communicate or interface with the interferometric spectrometer 302, such that any other component of the system 310 can electronically interact with (e.g., transmit electronic instructions or commands to, receive electronic data from, manipulate) the interferometric spectrometer 302. Likewise, in various cases, the access component 316 can electronically access the point spread function 304. That is, the access component 316 can electronically receive, electronically retrieve, or electronically obtain the point spread function 304, such that any other component of the system 310 can electronically utilize (e.g., for spectral processing purposes) or otherwise manipulate (e.g., adjust parameter values of) the point spread function 304.

In various embodiments, the system 310 can have or include a calibration component 318. In various cases, the calibration component 318 can, as described herein, electronically calibrate the parameters of the point spread function 304, so that geometric artifacts in spectra produced by the interferometric spectrometer 302 can be reduced or removed.

In various embodiments, the system 310 can have or include an execution component 320. In various aspects, the execution component 320 can, as described herein, electronically reduce or remove geometric artifacts from spectra produced by the interferometric spectrometer 302, by utilizing the calibrated parameters of the point spread function 304 identified by the calibration component 318.

Note that, in various instances, the access component 316, the calibration component 318, and the execution component 320 can collectively be considered as being one or more software components 315 of the system 310. In various aspects, it should be appreciated that the one or more software components 315 are described primarily herein as comprising three components (e.g., the access component 316, the calibration component 318, and the execution component 320) for ease of explanation and illustration. However, the one or more software components 315 are not limited to being implemented as exactly such three components in every embodiment. Indeed, in some embodiments, the functionalities described herein of such three components can be combined in any suitable fashions, so as to be implemented in or by fewer than three components (e.g., in some cases, a single component can perform all of the functionalities that are described herein with respect to the access component 316, the calibration component 318, and the execution component 320). In other embodiments, the functionalities described herein of such three components can instead be distributed, separated, split, or fragmented in any suitable fashions, so as to be implemented in or by more than three components (e.g., two or more components can facilitate the functionalities that are performable by the access component 316; two or more components can facilitate the functionalities that are performable by the calibration component 318; two or more components can facilitate the functionalities that are performable by the execution component 320).

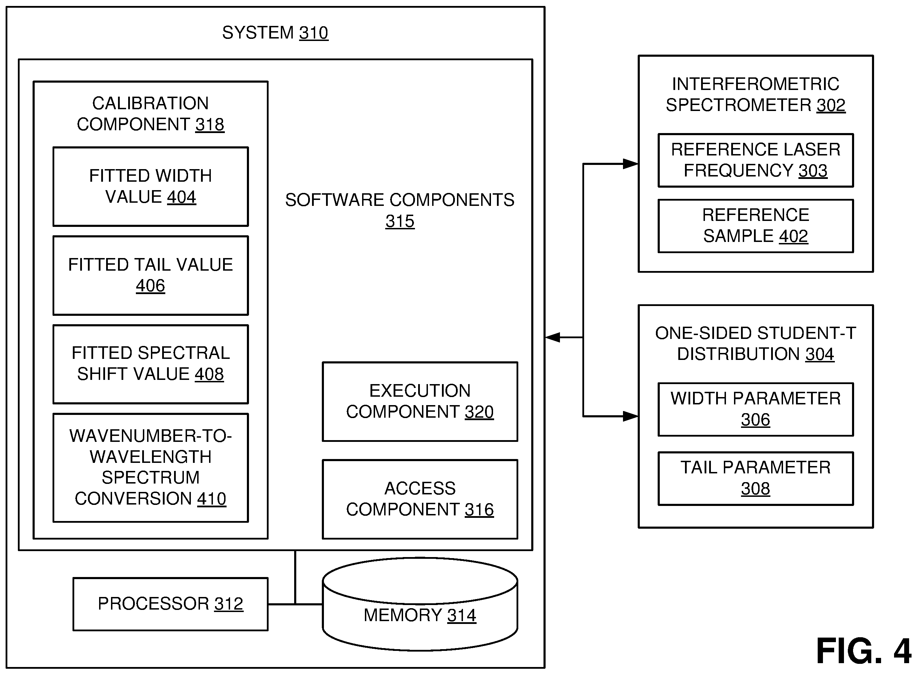

FIG. 4 illustrates a block diagram of an example, non-limiting system including fitted deconvolution parameter values and a wavenumber-to-wavelength spectrum conversion that can facilitate spectrum deconvolution for interferometric spectrometers in accordance with one or more embodiments described herein.

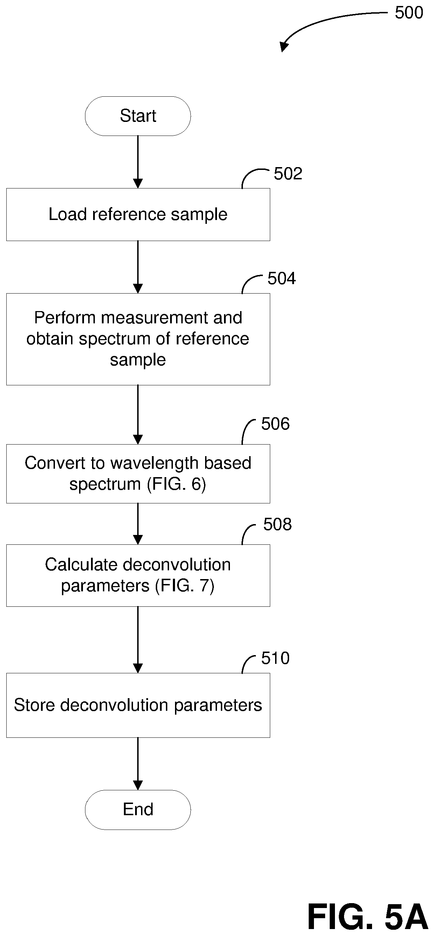

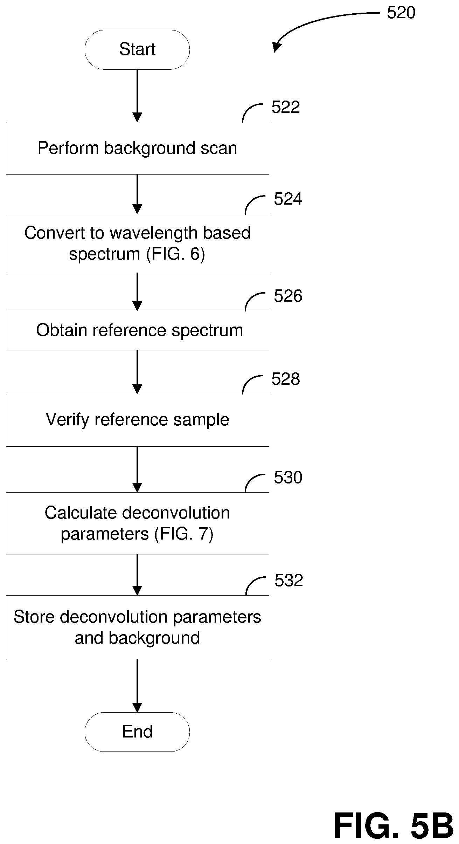

In various embodiments, the interferometric spectrometer 302 can be loaded with a reference sample 402. In various aspects, the reference sample 402 can be any suitable collection of matter for which a spectrum that is devoid of or untainted by geometric artifacts (otherwise referred to as a ground-truth spectrum) is available or otherwise known. As a non-limiting example, the reference sample 402 can be any suitable type of gas or gaseous mixture, such as carbon monoxide, carbon dioxide, methane, water vapor, nitrogen oxide, sulfur dioxide, ammonia, hydrogen sulfide, or volatile organic compounds. As another non-limiting example, the reference sample 402 can be any suitable type of liquid solution or aqueous mixture, such as water, organic solvents, oils, beverages, or pharmaceutical agents. As even another non-limiting example, the reference sample 402 can be any suitable type of solid or alloy, such as thermoplastics, rubbers, silicates, carbonates, oxides, waxes, or food solids. It should be noted, however, that various embodiments described herein perform better with respect to gaseous samples rather than liquid or solid samples. In any case, because the reference sample 402 can correspond to a ground-truth spectrum, the calibration component 318 can electronically calibrate the point spread function 304, such that deconvolving spectra produced by the interferometric spectrometer 302 with the point spread function 304 reduces or removes geometric artifacts from those spectra. More specifically, the calibration component 318 can compute, calculate, or otherwise determine a fitted width parameter 404, a fitted tail parameter 406, or a fitted spectral shift parameter 408, based on the reference sample 402 and by leveraging a wavenumber-to-wavelength spectrum conversion 410. Various non-limiting aspects are described with respect to FIGs. 5-8.

FIGS. 5A and 5B show methods 500 and 520 for calibrating the interferometric spectrometer. The calibration includes generating the deconvolution parameters. Before executing methods 500 and 520, the reference laser of the interferometric spectrometer may already have been calibrated. Calibrating the reference laser includes acquiring the spectrum of a reference sample using the interferometric spectrometer and determining the reference laser's frequency by matching the peak location of the acquired spectrum with the known spectral peak location of the reference sample. The sample spectrum for reference laser calibration can be acquired using a large aperture.

FIG. 5A shows an example method 500 for calibrating an interferometric spectrometer using a reference sample loaded into the interferometric spectrometer. Method 500 can be used for in-factory calibration for reducing the effect of strayed light entering the interferometer of the interferometric spectrometer. The spectra acquired or obtained can be absorption or transmission spectra.

At 502, a reference sample is loaded into the interferometric spectrometer. The reference sample can be a liquid, solid, or gas sample. In one example, the reference sample is of known composition. A known spectrum of the reference sample can be obtained from a spectral library based on its composition. In another example, the known spectrum is experimentally measured. For example, the known spectrum of the reference sample can be measured using an interferometric spectrometer with a small aperture (J-stop).

At 504, a spectrum is acquired from the reference sample using the interferometric spectrometer. If the known spectrum is acquired from the reference sample, the J-stop used at this step is larger than the one used for acquiring the known spectrum. The acquired spectrum may be wavenumber-basis. In one example, the spectrum is acquired using the interferometric spectrometer with a calibrated reference laser.

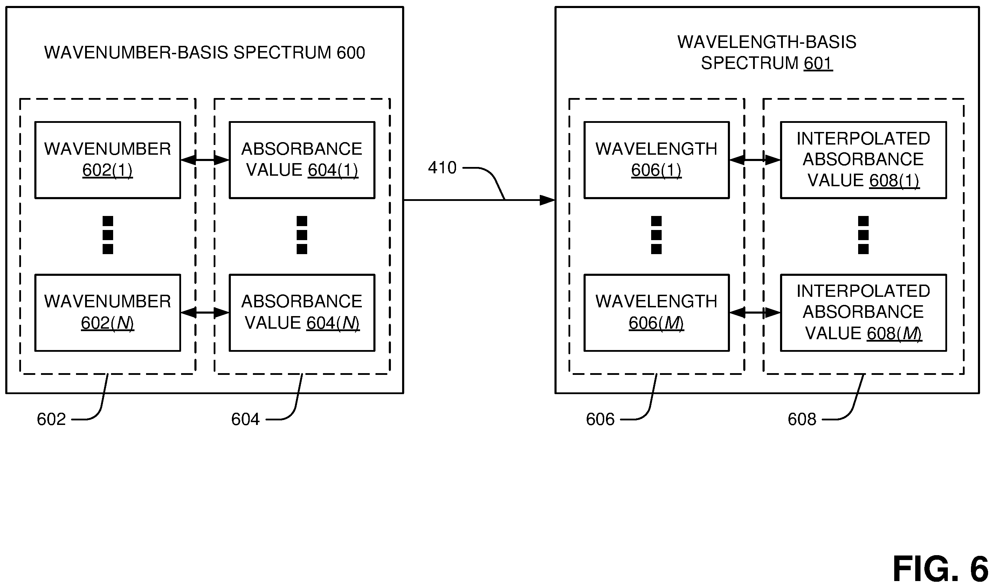

At 506, any of the wavenumber-basis spectrum is converted to the wavelength-basis spectrum. Details of the conversion are described in FIG. 6. The conversion may be applied to the acquired sample spectrum at 504, as well as the known spectrum obtained at 502.

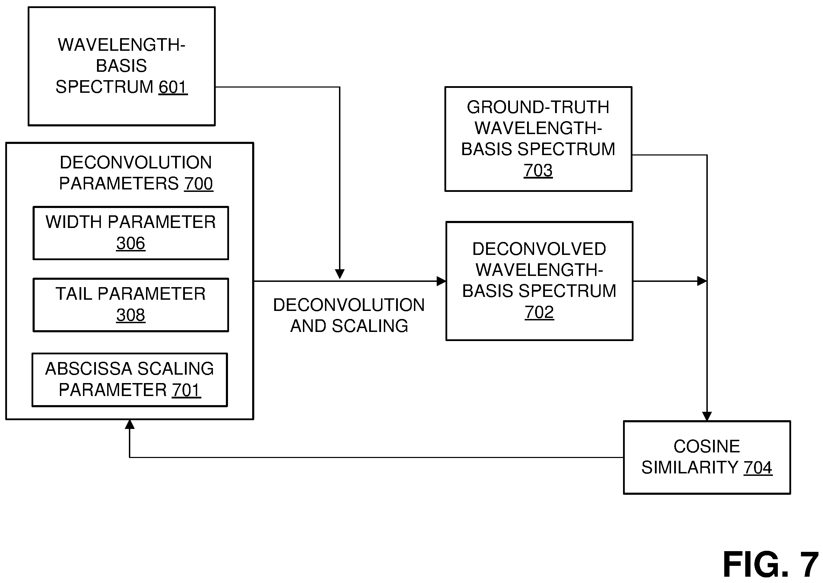

At 508, one or more deconvolution parameters are calculated based on the wavelength-basis reference spectrum and the known spectrum of the reference spectrum. The one or more deconvolution parameters include the width and tail parameters, which relate to the shape of the point spread function used in deconvolution. The deconvolution parameters may also include an spectral shift parameter relating to the spectral shift caused by the frequency shift introduced by one or more of the light source, the system configuration, and the deconvolution process. FIG. 7 details the method for calculating the deconvolution parameters.

At 510, the calculated deconvolution parameters are stored in the memory.

FIG. 5B shows another method 520 for calibrating an interferometric spectrometer, to reduce the effect of strayed light entering the interferometer of the interferometric spectrometer. Different from FIG. 5A, in method 520, the reference spectrum is obtained from a background scan. Method 520 may be conducted by a user during the lifetime of the interferometric spectrometer, as such, method 520 can compensate for the changes of various components of the interferometric spectrometer as well as the environmental change over time. Method 520 can be used after method 500, to further update the deconvolution parameters, or as a standalone method to calculate the deconvolution parameters.

At 522, a background scan is performed by the interferometric spectrometer without loading any sample. The background scan can be used for extracting the background signals of the acquired signal. It is routinely performed before measuring a sample and removed from the acquired sample spectrum. Applicants recognize that the background spectrum acquired from the background scan also includes absorption information of carbon dioxide or water, and this absorption information can be used to obtain the reference spectrum.

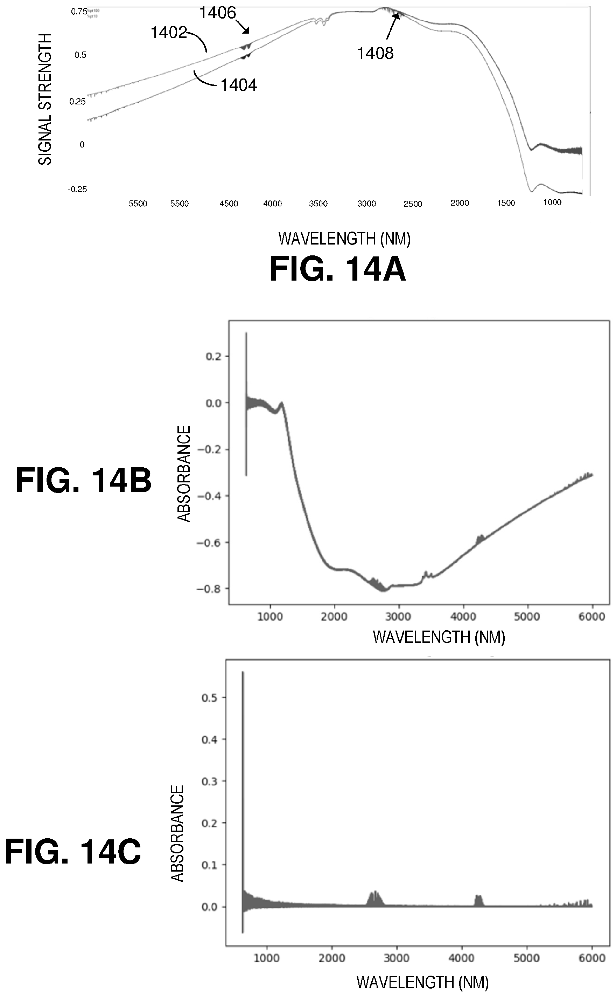

At 524, if the acquired background spectrum is wavenumber-basis, it is converted into wavelength-basis, as described in FIG. 6. FIG. 14A shows the converted background spectra 1402 and 1404. Spectrum 1402 was acquired with a larger J-stop compared to spectrum 1404. The spectrum 1402 is broader compared to spectrum 1404 due to more stray light entering the interferometer. Absorptions from carbon dioxide and water can be observed in the background spectrum, as indicated by arrows 1406 and 1408.

At 526, the reference spectrum is generated from the converted background spectrum at 524. Generating the reference spectrum may include removing the background signal from an inverted background spectrum. FIG. 14B shows an inverted background spectrum, and FIG. 14C shows the reference spectrum with the background removed. Inverting the background spectrum includes taking the negative of the background spectrum. The background may be extracted from a spectrum by low-pass filtering. The extracted background may be stored for processing the sample spectrum. The reference spectrum shown in FIG. 14C is an absorption spectrum of carbon dioxide and water in the ambient air.

In some examples, reference spectrum may be obtained before converting the spectrum into wavelength-basis. In other words, step 526 can happen before step 524.

At 528, method 520 verifies that the spectral peaks of the reference sample exist in the reference spectrum of 526. The reference sample may include carbon dioxide and/or water. Due to the change in the composition of the ambient air, the signals of the reference sample may not be strong enough to reliably generate the reference spectrum. Step 528 checks the quality of the reference spectrum at 526 to determine whether it can be used for calibrating the interferometric spectrometer. In one example, the quality of the reference spectrum can be used for calibration if the locations of the spectral peaks correspond to the expected spectral peaks of the reference sample. In another example, the quality of the reference spectrum can be used for calibration if the signal to noise ratio (SNR) of the spectral peak is higher than a threshold SNR.

At 530, the deconvolution parameters are calculated based on the reference spectrum and the known spectrum of the reference sample (e.g., water and/or carbo dioxide). The known spectrum may be obtained from a library or experimentally measured using a small J-stop. The known spectrum may be experimentally obtained by measuring the reference sample (502 and 504 of method 500) or from background scan (522 of method 520). The deconvolution parameters can be calculated as described in FIG. 7.

At 532, the deconvolution parameters are stored for processing acquired sample spectrum. Background extracted from the background spectrum acquired at 522 may also be stored.

Next, consider FIG. 6. In various aspects, the calibration component 318 can electronically instruct, electronically command, or otherwise electronically cause the interferometric spectrometer 302 to scan the reference sample 402. In various instances, such scan can be performed using any suitable operational settings of the interferometric spectrometer 302. As a non-limiting example, such scan can be performed using any suitable openness or closedness setting of the adjustable aperture of the interferometric spectrometer 302. As another non-limiting example, such scan can be performed using any suitable physical position or orientation settings of the adjustable mirrors of the interferometric spectrometer 302. As yet another non-limiting example, such scan can be performed using any suitable power setting of the light source of the interferometric spectrometer 302. In any case, such scan can cause the interferometric spectrometer 302 to produce, generate, or otherwise output a wavenumber-basis spectrum 600.

In various aspects, the wavenumber-basis spectrum 600 can be considered as a graph, plot, or chart of absorbance value (or transmittance value, as appropriate) exhibited by the reference sample 402 as a function of wavenumber. In other words, absorbance value can be considered as the ordinate of the wavenumber-basis spectrum 600, and wavenumber can be considered as the abscissa of the wavenumber-basis spectrum 600. In still other words, the wavenumber-basis spectrum 600 can be a collection of tuples, where each tuple can indicate a respective wavenumber and a respective absorbance value that was recorded by the interferometric spectrometer 302 at that respective wavenumber when the reference sample 402 was scanned. In particular, the wavenumber-basis spectrum 600 can contain or include a plurality of wavenumbers 602 and a plurality of absorbance values 604.

In various instances, the plurality of wavenumbers 602 can have a total of n wavenumbers for any suitable positive integer *n* > 1: a wavenumber 602(1) to a wavenumber 602(*n*). In various cases, each of the plurality of wavenumbers 602 can be unique, such that the plurality of wavenumbers 602(1) can be considered as discretely spanning a continuous range or interval of wavenumbers (e.g., a wavenumber 602(*i*) can be greater than a wavenumber 602(*i* + 1) for all integers 1 ≤ *i < n*)*.* More specifically, the plurality of wavenumbers 602 can be evenly-spaced or otherwise linearly-distributed across that continuous range. That is, there can be any suitable positive real number *j* such that the wavenumber 602(*i* + 1) is equal to the wavenumber 602(*i*) plus *j* for all integers 1 ≤ *i < n.*

In any case, the plurality of absorbance values 604 can respectively correspond (e.g., in one-to-one fashion) with the plurality of wavenumbers 602. So, because the plurality of wavenumbers 602 can have a total of *n* wavenumbers, the plurality of absorbance values 604 can likewise have a total of *n* intensity values: an absorbance value 604(1) to an absorbance value 604(*n*). In various aspects, each of the plurality of absorbance values 604 can be a respective absorbance value that the interferometric spectrometer 302 measured, recorded, or registered at a respective one of the plurality of wavenumbers 602 during the scan of the reference sample 402. As a non-limiting example, the absorbance value 604(1) can correspond to the wavenumber 602(1). Thus, the absorbance value 604(1) can be a real-valued scalar indicating how much light at the wavenumber 602(1) was absorbed by the reference sample 402. As another non-limiting example, the absorbance value 604(*n*) can correspond to the wavenumber 602(*n*). So, the absorbance value 604(*n*) can be a real-valued scalar indicating how much light at the wavenumber 602(*n*) was absorbed by the reference sample 402. In some cases, the wavenumber 602(1) and the absorbance value 604(1) can be considered as collectively forming a first tuple of the wavenumber-basis spectrum 600, whereas the wavenumber 602(*n*) and the absorbance value 604(*n*) can be considered as collectively forming an *n*-th tuple of the wavenumber-basis spectrum 600.

Note that, because of off-axis light beams that might occur within the interferometric spectrometer 302 during scanning of the reference sample 402, the wavenumber-basis spectrum 600 can exhibit or otherwise show geometric artifacts. As a non-limiting example, one or more absorbance peaks (e.g., subsets of the plurality of absorbance values 604 that form local maxima) in the wavenumber-basis spectrum 600 can be located at incorrect or inaccurate wavenumbers (e.g., at wavenumbers that are unexpected or that otherwise do not match those indicated in whatever ground-truth spectra that are known or deemed to correspond to the reference sample 402). As another non-limiting example, one or more absorbance peaks in the wavenumber-basis spectrum 600 can be misshapen (e.g., can have leading edges or trailing edges that are unexpectedly shallow or heavy).

In various embodiments, the calibration component 318 can apply the wavenumber-to-wavelength spectrum conversion 410 to the wavenumber-basis spectrum 600. In various aspects, such application can convert or translate the wavenumber-basis spectrum 600 into a wavelength-basis spectrum 601.

More specifically, the wavenumber-to-wavelength spectrum conversion 410 can involve reciprocating each of the plurality of wavenumbers 602. As a non-limiting example, the calibration component 318 can reciprocate the wavenumber 602(1), thereby yielding a first wavelength. As another non-limiting example, the calibration component 318 can reciprocate the wavenumber 602(*n*), thereby yielding an *n*-th wavelength. Note that the first wavelength can be considered as corresponding to the absorbance value 604(1). Likewise, the *n*-th wavelength can be considered as corresponding to the absorbance value 604(*n*). So, such reciprocation can be considered as yielding an intermediate spectrum that is made up of *n* wavelength-absorbance tuples (e.g., the absorbance value 604(1) and the first wavelength can together be considered as forming a first wavelength-absorbance tuple; the absorbance value 604(*n*) and the *n*-th wavelength can together be considered as forming an *n*-th wavelength-absorbance tuple). However, that intermediate spectrum can be unevenly-spaced in terms of wavelength. Indeed, because the plurality of wavenumbers 602 can already be evenly-spaced, and because reciprocation can be considered as a non-linear function or non-linear transformation, the *n* wavelengths that make up the intermediate spectrum can have no common, uniform, or constant spacing between them (e.g., 1, 2, 3, 4, 5 are evenly-spaced; but 1/1, 1/2, 1/3, 1/4, 1/5 are not evenly spaced).

In various aspects, the wavenumber-to-wavelength spectrum conversion 410 can involve morphing that intermediate spectrum via spline fitting. In particular, that intermediate spectrum can be considered as discretely representing a relationship between wavelength (abscissa) and absorbance value (ordinate). In various instances, the calibration component 318 can fit, via any suitable fitting technique such as least sum of squares, a spline (or any other suitable curve) to the intermediate spectrum. Such fitted spline can be considered as continuously representing a relationship between wavelength (abscissa) and absorbance value (ordinate). In various cases, the calibration component 318 can select, from the continuous domain of the fitted spline, any suitable number of evenly-spaced or linearly-distributed wavelength values. Such selected, evenly-spaced wavelength values can be referred to as a plurality of wavelengths 606. In various aspects, the plurality of wavelengths 606 can have a total of *m* wavelengths, for any suitable positive integer *m*: a wavelength 606(1) to a wavelength 606(*m*). In various instances, because the plurality of wavelengths 606 can be evenly-spaced or linearly-distributed along the domain of the fitted spline, there can be any suitable positive real number *q* such that a wavelength 606(*r* + 1) is equal to a wavelength 606(*r*) plus *q* for all integers 1 ≤ *r* < *m*. In some cases, *q* can be equal to a smallest inter-wavelength space that is present within the *n* wavelengths that result from reciprocation.

In various aspects, the wavenumber-to-wavelength spectrum conversion 410 can involve identifying a plurality of interpolated absorbance values 608 based on the plurality of wavelengths 606. More specifically, for each of the plurality of wavelengths 606, the calibration component 318 can identify a respective absorbance value that is mapped or linked to that wavelength by the fitted spline. Because the intermediate spectrum is made up of discrete wavelength-absorbance tuples that are not evenly-spaced, and because the plurality of wavelengths 606 are evenly-spaced, the intermediate spectrum does not explicitly indicate absorbance values for the plurality of wavelengths 606 (e.g., many, if not most, of the plurality of wavelengths 606 can be located in between the discrete wavelength values that make up the intermediate spectrum). But, because the fitted spline can be continuous rather than discrete, the fitted spline can be considered as filling in or interpolating the missing absorbance values for those in-between wavelengths. As a non-limiting example, the calibration component 318 can feed the wavelength 606(1) as an input argument to the fitted spline, and this can cause the fitted spline to produce an interpolated absorbance value 608(1). In various cases, the interpolated absorbance value 608(1) can be considered as the absorbance value that the intermediate spectrum would have indicated for the wavelength 606(1) if the intermediate spectrum explicitly included or contained the wavelength 606(1) in one of its tuples. As another non-limiting example, the calibration component 318 can feed the wavelength 606(*m*) as an input argument to the fitted spline, and this can cause the fitted spline to produce an interpolated absorbance value 608(*m*). As above, the interpolated absorbance value 608(*m*) can be considered as the absorbance value that the intermediate spectrum would have indicated for the wavelength 606(*m*) if the intermediate spectrum explicitly included or contained the wavelength 606(*m*) in one of its tuples.

In various cases, the interpolated absorbance value 608(1) to the interpolated absorbance value 608(*m*) can collectively be considered as forming a plurality of interpolated absorbance values 608 that respectively correspond to the plurality of wavelengths 606.

In various aspects, the plurality of wavelengths 606 and the plurality of interpolated absorbance values 608 can together be considered as discretely making up the wavelength-basis spectrum 601. Accordingly, the wavelength-basis spectrum 601 can be considered as a graph, plot, or chart of absorbance value exhibited by the reference sample 402 as a function of evenly-spaced wavelength rather than as a function of evenly-spaced wavenumber. In other words, absorbance value can be considered as the ordinate of the wavelength-basis spectrum 601, and wavelength (not wavenumber) can be considered as the abscissa of the wavelength-basis spectrum 601. In still other words, the wavelength-basis spectrum 601 can be a collection of tuples, where each tuple can indicate a respective wavelength and a respective absorbance value that was recorded by the interferometric spectrometer 302 at that respective wavelength during the scan of the reference sample 402. In some cases, the wavelength 606(1) and the interpolated absorbance value 608(1) can be considered as collectively forming a first tuple of the wavelength-basis spectrum 601, whereas the wavelength 606(*m*) and the interpolated absorbance value 608(*m*) can be considered as collectively forming an *m*-th tuple of the wavelength-basis spectrum 601.

Note that the wavelength-basis spectrum 601 can be considered as a substantively equivalent, but reformatted, version of the wavenumber-basis spectrum 600. Indeed, the wavenumber-basis spectrum 600 can be considered as showing absorbance value arranged or organized according to linearly-distributed wavenumber, whereas the wavelength-basis spectrum 601 can instead be considered as showing absorbance value rearranged or reorganized according to linearly-distributed wavelength. Accordingly, whatever geometric artifacts that are exhibited by the wavenumber-basis spectrum 600 can also be exhibited in some form or another within the wavelength-basis spectrum 601.

Now, consider FIG. 7, which shows an example, non-limiting block diagram of calculating optimized or fitted values of deconvolution parameters 700 by leveraging the wavelength-basis spectrum 601 and a known spectrum 703 of the reference sample 402.

In various aspects, the deconvolution parameters 700 can include the width parameter 306, the tail parameter 308, and an spectral shift parameter 701. In various instances, as explained above, the width parameter 306 and the tail parameter 308 can be real-valued scalar variables that characterize or govern a shape of the point spread function 304. In various cases, the spectral shift parameter 701 can be another real-valued scalar variable. In various aspects, the calibration component 318 can electronically initialize the width parameter 306, the tail parameter 308, and the spectral shift parameter 701 with random values. In various instances, a random width value can be a real scalar whose magnitude is randomly chosen or selected from whatever domain corresponds to the width parameter 306. Likewise, a random tail value can be a real scalar whose magnitude is randomly chosen or selected from whatever domain corresponds to the tail parameter 308.

In various aspects, the calibration component 318 can assign the random width value to the width parameter 306, and the calibration component 318 can likewise assign the random tail value to the tail parameter 308. In other words, the width parameter 306 and the tail parameter 308 can be considered as variables that define the point spread function 304, and the calibration component 318 can cause those variables to respectively be set or equal to the random width value and the random tail value. This can be considered as causing the point spread function 304 to have or exhibit a random peak width and a random tail heaviness. In various instances, the calibration component 318 can perform a deconvolution operation on the wavelength-basis spectrum 601, using such randomly-shaped version of the point spread function 304. More specifically, using the notation of the above-described formula for the point spread function 304, *w* can be equal to the random width value, and *v* can be equal to the random tail value. In various aspects, a deconvolution operation can be considered as a defined mathematical operation (e.g., defined by any suitable deconvolution algorithm or technique, such as the Richardson-Lucy algorithm or the Landweber algorithm) that takes as input arguments two distinct or separate distributions and that produces as output a third distribution based on those two inputted distributions. In various cases, the wavelength-basis spectrum 601 can be considered as a first one of the two inputted distributions, and the point spread function 304 as shaped by the random width value and the random tail value can be considered as the second one of the two inputted distributions. Note that, using the notation of the above-described formula for the point spread function 304, *x* can take on wavelength values rather than wavenumber values. In any case, whatever distribution that is outputted by the performance of the deconvolution operation on the wavelength-basis spectrum 601 and the randomly-shaped point spread function 304 can be referred to as a preliminarily deconvolved wavelength-basis spectrum.

In various aspects, the calibration component 318 can perform spectral shift on the preliminarily deconvolved wavelength-basis spectrum using the random spectral shift value. More specifically, the deconvolved wavelength-basis spectrum can be considered as a graph, plot, or chart of absorbance value versus wavelength, where absorbance value is the ordinate and where wavelength is the abscissa. In various instances, the calibration component 318 can multiply (e.g., can scale) all of the abscissa values (e.g., all of the indicated wavelengths) within the preliminarily deconvolved wavelength-basis spectrum by the random spectral shift value. In various cases, whatever resulting distribution is produced by such spectral shift can be referred to as a deconvolved wavelength-basis spectrum 702. In some aspects, the spectral shift is calculated from the spectral peak location difference between the preliminarily deconvolved wavelength-basis spectrum and the known location in the known spectrum 703.

Note that it can be desired or intended that the deconvolved wavelength-basis spectrum 702 correctly, accurately, properly, or otherwise without geometric artifacts show how the reference sample 402 absorbed (or transmitted, as appropriate) light during the scan performed by the interferometric spectrometer 302. However, because the deconvolved wavelength-basis spectrum 702 can be generated via random parameter initialization (e.g., using randomly initialized values for the deconvolution parameters 700), the deconvolved wavelength-basis spectrum 702 can, in actuality, be highly inaccurate or incorrect. In other words, the deconvolved wavelength-basis spectrum 702 can contain very many conspicuous, noticeable, or egregious geometric artifacts.

Now, in various embodiments, the reference sample 402 can correspond to the ground-truth wavelength-basis spectrum 703. In various aspects, the ground-truth wavelength-basis spectrum 703 can be considered as a graph, plot, or chart of absorbance value versus wavelength that is known or deemed to be correct or accurate for the reference sample 402. In other words, the ground-truth wavelength-basis spectrum 703 can lack or otherwise be devoid of geometric artifacts (e.g., can be devoid of misplaced or misshapen peaks).

In various instances, the calibration component 318 can electronically compute a cosine similarity 704 (or any other suitable error metric) between the ground-truth wavelength-basis spectrum 703 and the deconvolved wavelength-basis spectrum 702. In various cases, the calibration component 318 can incrementally update the randomly initialized values of the deconvolution parameters 700, by performing any suitable optimization technique or algorithm that is driven by the cosine similarity 704. As a non-limiting example, such optimization technique or algorithm can be stochastic gradient ascent. As another non-limiting example, such optimization technique or algorithm can be Nelder-Mead optimization.

In various aspects, the calibration component 318 can electronically recompute that deconvolved wavelength-basis spectrum 702 using the updated values of the deconvolution parameters 700.

In various aspects, the calibration component 318 can repeat this cycle of deconvolution, spectral shift, cosine similarity computation, and updating for any suitable number of iterations. In various aspects, each iteration can cause the cosine similarity 704 to incrementally increase, meaning that the most recently calculated version of the deconvolved wavelength-basis spectrum 702 possesses fewer or less noticeable geometric artifacts than the previously calculated version of the deconvolved wavelength-basis spectrum 702. In various instances, the calibration component 318 can repeat such iterations until the cosine similarity 704 exceeds any suitable threshold value (e.g., is within any suitable threshold margin of 1) or when a defined number of iterations have been performed. At such point, the most recent or last updated values of the deconvolution parameters 700 can be considered as having been optimized, calibrated, or otherwise fitted for accurately, correctly, or reliably removing geometric artifacts from spectra produced for any samples by the interferometric spectrometer 302 (at least from spectra generated using that same operational settings that the interferometric spectrometer 302 used to scan the reference sample 402). Accordingly, the most recent or last updated value of the width parameter 306 can be referred to as the fitted width parameter 404. Likewise, the most recent or last updated value of the tail parameter 308 can be referred to as the fitted tail parameter 406. Similarly, the most recent or last updated value of the spectral shift parameter 701 can be referred to as the fitted spectral shift parameter 408.

Although FIG. 7 shows the iterative identification of the fitted width parameter 404, the fitted tail parameter 406, and the fitted spectral shift parameter 408 via cosine similarity computation, it should be understood or otherwise appreciated that this is a mere non-limiting example for ease of illustration and explanation. In various other embodiments, any other suitable measure of similarity or error between the ground-truth wavelength-basis spectrum 703 and the deconvolved wavelength-basis spectrum 702 can be implemented, such as: Euclidean distance, mean absolute error, mean squared error, or cross-entropy error. It should be understood that, when a similarity measurement is used, the optimization technique or algorithm can be driven so as to increase such similarity measurement (e.g., stochastic gradient ascent), whereas, when an error measurement is used, the optimization technique or algorithm can instead be driven so as to decrease such error measurement (e.g., stochastic gradient descent).

In various aspects, FIG. 7 can be considered as showing a method of calculating the deconvolution parameters 700 based on a reference spectrum (e.g., 601) and a known spectrum (e.g., 703) of the reference sample 402. The deconvolution of a spectrum is based on a point spread function (e.g., 304). The shape of the point spread function is characterized by parameters including a width parameter (e.g., 306) and a tail parameter (e.g., 308). A width parameter may be the FWHM of the point spread function. The tail parameter relates to the length of the tail. The point spread function may be a one-sided student-t distribution. The reference spectrum is deconvoluted based on the point spread function defined by the width parameter and the tail parameter and then adjusted based on an spectral shift parameter *e.g., 701). The deconvolution operation may be implemented using the Richardson-Lucy algorithm or the Landweber algorithm. Adjusting the spectrum based on the spectral shift parameter may include shifting the spectrum along the x-axis by the spectral shift parameter. Deconvoluting the acquired reference spectrum based on the deconvolution parameters 700 results in a deconvoluted reference spectrum (e.g., 702). The deconvoluted reference spectrum is compared with the known spectrum of the reference sample. For example, the difference between the two spectra can be quantified using cosine similarity (e.g., 704). The deconvolution parameters 700 are then updated based on the difference of the deconvoluted reference spectrum and the known spectrum. As such, the deconvolution parameters 700 are updated or optimized iteratively to minimize the difference between the deconvoluted reference spectrum and the known spectrum. The deconvolution parameter may be updated based on an iterative method such as stochastic gradient ascent or Nelder-Mead method. The iteration process may end after a pre-determined number of iterations or when the difference is smaller than a pre-determined difference.

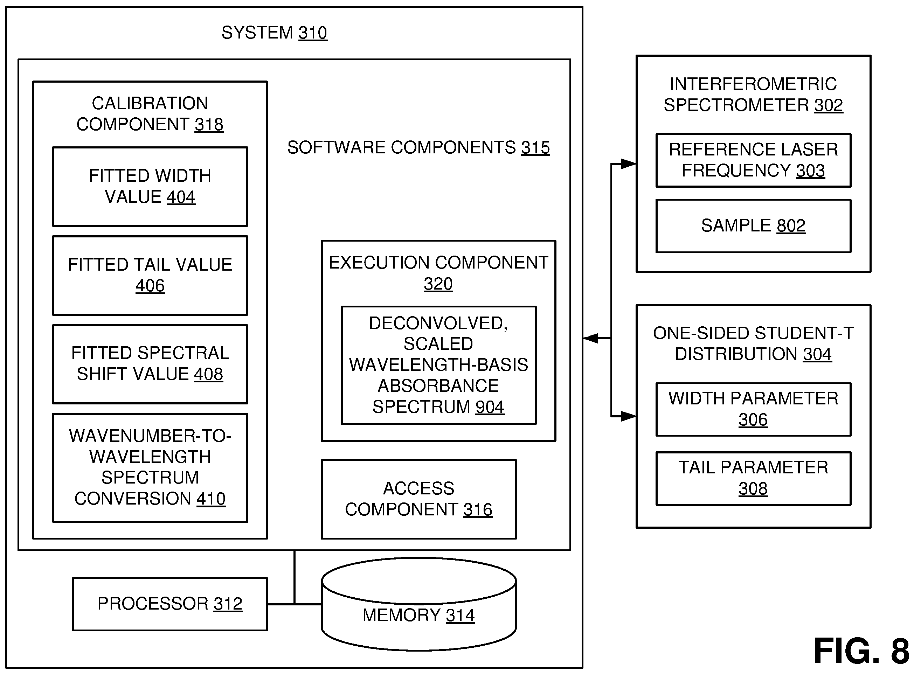

FIG. 8 illustrates a block diagram of an example, non-limiting system including a deconvolved wavelength-basis spectrum for a desired sample in accordance with one or more embodiments described herein.

In various embodiments, as shown, a sample of interest 802 can be loaded or positioned in the interferometric spectrometer 302. In various aspects, the sample 802 can be any suitable collection of matter (e.g., solid, liquid, or gas) for which ground-truth spectra are not known or are otherwise not available. In other words, the sample 802 can be completely unrelated to, non-identical to, or different from the reference sample 402 in terms of chemical composition. In any case, it can be desired for the interferometric spectrometer 302 to capture or generate a spectrum for the sample 802 that lacks or is otherwise devoid of geometric artifacts. In various instances, the execution component 320 can electronically facilitate the capture or generation of such a spectrum, which can be referred to as a deconvolved wavelength-basis spectrum 804. Specifically, the execution component 320 can instruct the interferometric spectrometer 302 to scan the sample 802, thereby yielding a wavenumber-basis spectrum of the sample 802. In various aspects, the execution component 320 can convert that wavenumber-basis spectrum into a wavelength-basis spectrum. In various instances, the execution component 320 can deconvolve that wavelength-basis spectrum using the fitted width parameter 404 and the fitted tail parameter 406, thereby yielding a preliminarily-deconvolved wavelength-basis spectrum. In various cases, the execution component 320 can then perform spectral shift on that preliminarily-deconvolved wavelength-basis spectrum, thereby yielding the deconvolved wavelength-basis spectrum 804.

Note that, because the fitted width parameter 404, the fitted tail parameter 406, and the fitted spectral shift parameter 408 can have been determined to remove or otherwise satisfactorily reduce geometric artifacts in spectra produced by the interferometric spectrometer 302 (at least when using whatever operational settings were used to scan the reference sample 402), the deconvolved wavelength-basis spectrum 804 can be considered as correctly, accurately, properly, or otherwise without geometric artifacts showing how the desired sample 802 absorbed light during the scan performed by the interferometric spectrometer 302. Further note that different fitted width, tail, or spectral shift values need not be computed for respective narrow intervals of wavelengths. Instead, the fitted width parameter 404, the fitted tail parameter 406, and the fitted spectral shift parameter 408 can reliably remove or reduce geometric artifacts for any samples and any wavelengths.

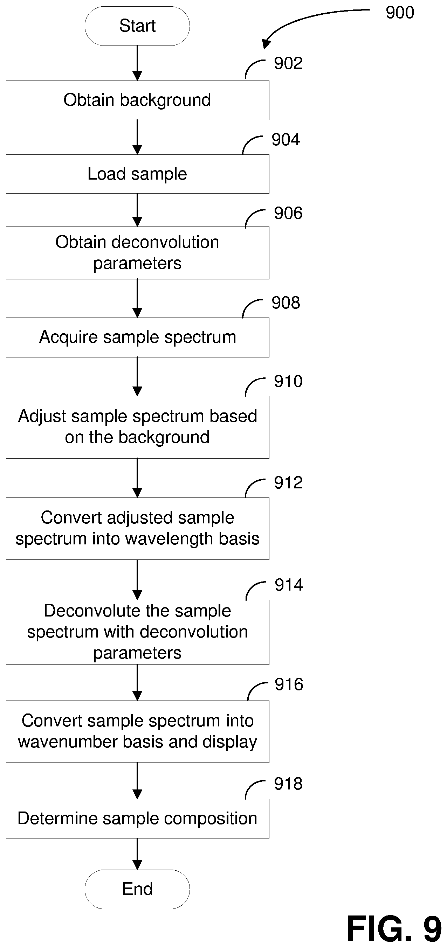

FIG. 9 illustrates an example method 900 for imaging or scanning a sample of interest using an interferometric spectrometer.

At 902, the background of the background scan is obtained. If the background scan has already been conducted according to method 520 of FIG. 5B, the background may be loaded from the memory. If no background is available, at 902, the background scan is conducted using the interferometric spectrometer when no sample is present, and the background is extracted from the background spectrum acquired in the background scan.

At 904, the sample of interest, such as sample 802 of FIG.8, is loaded or positioned in the interferometric spectrometer.

At 906, the deconvolution parameters are loaded from the memory. The deconvolution parameters may be generated from method 500 of FIG. 5A or method 520 of FIG. 5B or otherwise as described with respect to FIGs. 6-7.

At 908, the sample of interest is imaged or scanned, and sample spectrum is acquired. Acquiring the sample spectrum includes generating an interferogram of the light detected by the detector. The interferogram may include the interference pattern of the reference laser. The interferogram is sampled based on the interference pattern of the reference laser, and the sample spectrum is generated via the sampled interferogram.

At 910, the background from 902 is removed from the acquired sample spectrum. Removing the acquired sample spectrum may include subtracting the background from the acquired sample spectrum.

At 912, if the acquired sample spectrum is wavenumber-basis, it is converted into wavelength-basis (e.g., via 410).

At 914, the wavelength-basis sample spectrum is deconvoluted using the deconvolution parameters obtained at 906. This can involve deconvolution using the fitted width parameter 404 and the fitted tail parameter 406, and this can also involve spectral shift using the fitted spectral shift parameter 408.

At 916, the deconvoluted sample spectrum can optionally be converted into wavenumber-basis (e.g., inverse of 410). The wavenumber-basis and/or the wavelength-basis sample spectrum can be displayed on a screen electronically connected to the controller.

At 918, the chemical composition of the sample may be determined based on the deconvoluted sample spectrum. The composition may be determined by comparing the spectral peaks in the sample spectrum with spectral peaks of known compounds (e.g., characteristic peak matching).

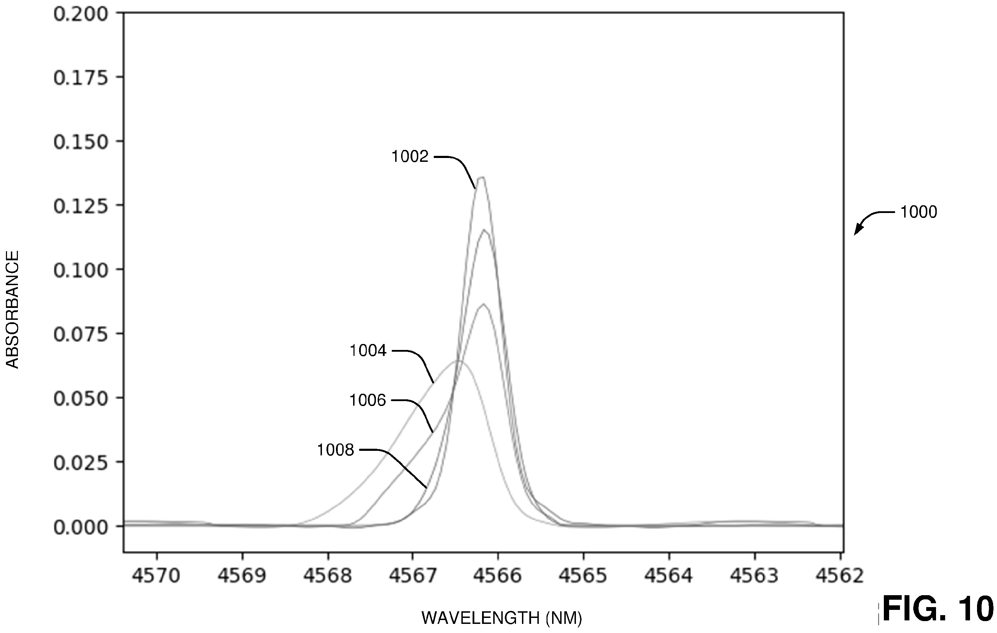

FIGs. 10-13 illustrate example, non-limiting experimental results in accordance with one or more embodiments described herein.

First, consider FIG. 10. FIG. 10 depicts a graph 1000 that demonstrates a technical benefit or technical advantage of the point spread function 304 over a Gaussian distribution. As shown, the abscissa of the graph 1000 is wavelength (e.g., in units of nanometers), whereas the ordinate of the graph 1000 is absorbance value (e.g., unitless).

An absorbance peak 1002 was experimentally measured by a real-world interferometric spectrometer for a carbon monoxide sample using a small openness setting (e.g., 10/100 openness setting) on its adjustable aperture. The absorbance peak 1002 can thus be considered as a ground-truth peak that lacks or is devoid of geometric defects.

An absorbance peak 1004 was experimentally measured by that same real-world interferometric spectrometer for that same carbon monoxide sample using a large openness setting (e.g., 100/100 openness setting) on its adjustable aperture. As can be seen, although the absorbance peak 1004 exhibits a higher signal-to-noise ratio (e.g., is of a higher or stronger resolution), it is afflicted with geometric defects. Specifically, the absorbance peak 1004 is erroneously shifted to a higher wavelength than the absorbance peak 1002, is much wider than the absorbance peak 1002, and has heavier and asymmetric tails compared to the absorbance peak 1002.

An absorbance peak 1006 was obtained by deconvolving the absorbance peak 1004 with a Gaussian distribution. As can be seen, implementation of the Gaussian distribution can be considered as curing the erroneous shift exhibited by the absorbance peak 1004 (e.g., the absorbance peak 1006 is located at about the same wavelength as the absorbance peak 1002). However, as can also be seen, implementation of the Gaussian distribution was not able to fully cure the misshapenness of the absorbance peak 1004 (e.g., one tail of the absorbance peak 1006 is still excessively heavy compared to those of the absorbance peak 1002).

An absorbance peak 1008 was obtained by deconvolving the absorbance peak 1004 with a one-sided student-t distribution. As can be seen, implementation of the one-sided student-t distribution can be considered as curing the erroneous shift exhibited by the absorbance peak 1004 (e.g., the absorbance peak 1008 is located at about the same wavelength as the absorbance peak 1002). Additionally, as can also be seen, implementation of the one-sided student-t distribution can be considered as doing a much better job of curing the misshapenness of the absorbance peak 1004 than the Gaussian distribution (e.g., the tails of the absorbance peak 1008 are very close to the tails of the absorbance peak 1002, unlike the excessively heavy tail of the absorbance peak 1006).

This experimental data demonstrates that spectrum deconvolution using a one-sided student-t distribution can be advantageous over spectrum deconvolution using a Gaussian distribution.

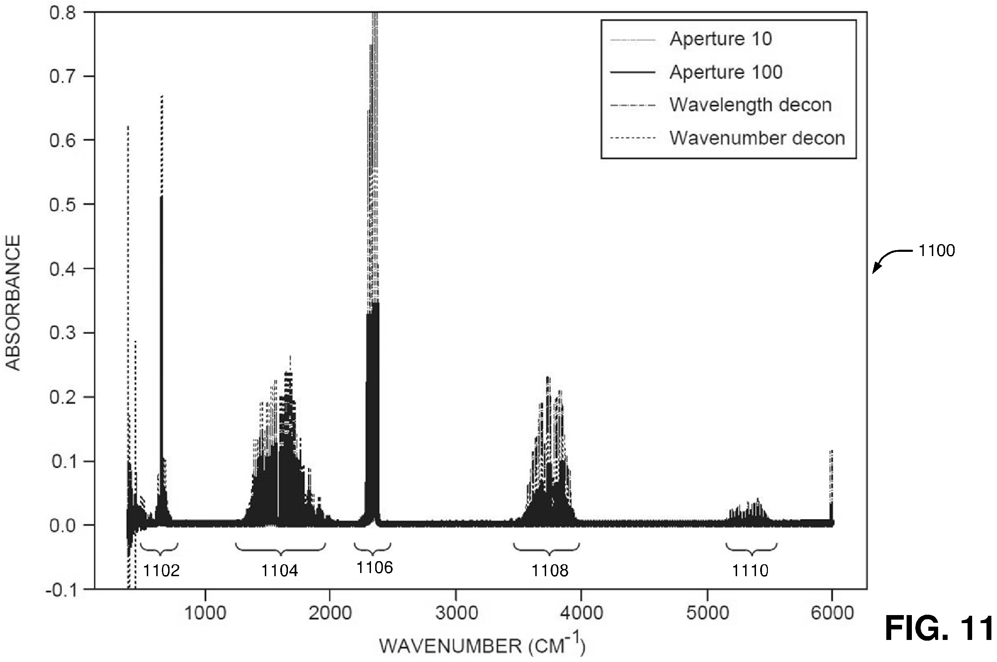

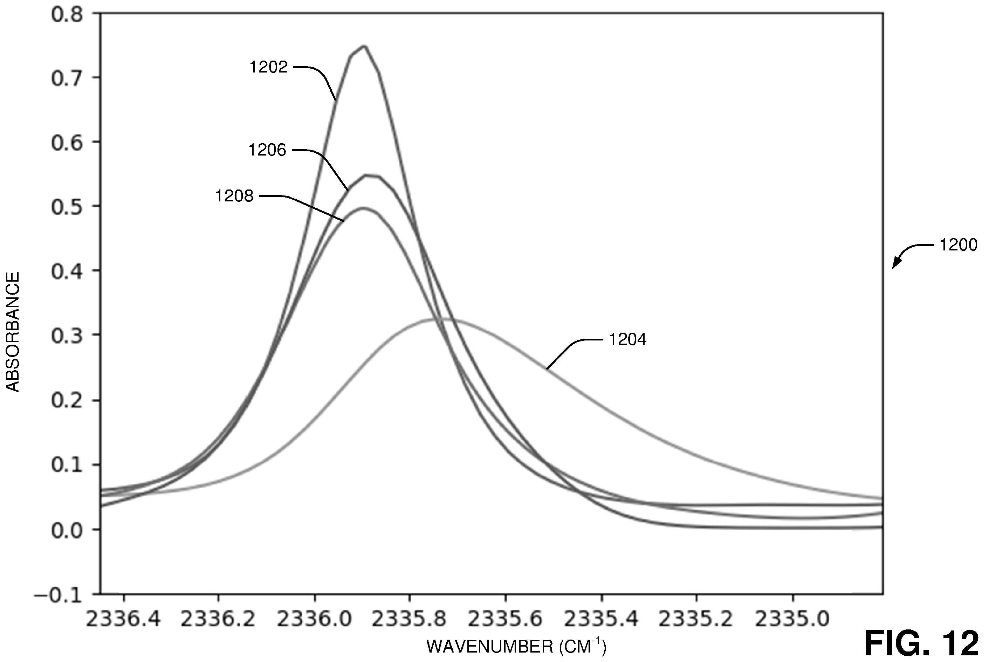

Next, consider FIG. 11. FIG. 11 depicts a graph 1100 whose abscissa is wavenumber and whose ordinate is absorbance value. As can be seen, the graph 1100 spans a very large range of wavenumbers (e.g., from 0 to 6000). The graph 1100 shows four overlapped spectra that were experimentally measured by a real-world interferometric spectrometer for a water vapor sample. One spectrum was measured using a small aperture setting (e.g., 10/100), a second spectrum was measured using a large aperture setting (e.g., 100/100), a third spectrum was obtained by deconvolving the second spectrum in a wavenumber-basis using a single set of fitted deconvolution parameter values for the entire range of wavenumbers, and a fourth spectrum was obtained by deconvolving the second spectrum in a wavelength-basis using a single set of fitted deconvolution parameter values for the entire range of wavenumbers. The graph 1100 exhibits various different absorbance peaks, some of which are respectively indicated by numerals 1102, 1104, 1106, 1108, and 1110. The first spectrum can be considered as a ground-truth, the second spectrum can be considered as riddled with geometric artifacts caused by off-axis beams in the interferometric spectrometer, and the third and fourth spectrums can be considered as attempts to remove those geometric artifacts. As can be seen in FIG. 11, but as is more clearly shown in FIGs. 12-13, the third spectrum adequately matches the ground-truth spectrum for some narrow wavenumber intervals (e.g., near 2300) but is significantly different from the ground-truth at other narrow wavenumber intervals (e.g., below 1000 or otherwise at the edges of the wavenumber range). In contrast, the fourth spectrum adequately matches the ground-truth spectrum along the entire wavenumber range. This demonstrates that wavelength-basis deconvolution is superior to wavenumber-basis deconvolution.

Now, consider FIG. 12. FIG. 12 depicts a graph 1200, which can be considered as a zoomed or cropped view of the portion of the graph 1100 that is denoted by numeral 1106. Note how the graph 1200 spans a very narrow range of wavenumbers (e.g., 2336.4 to 2335.0).

An absorbance peak 1202 was experimentally measured by the real-world interferometric spectrometer for the water vapor sample using a small openness setting (e.g., 10/100 openness setting) on its adjustable aperture. The absorbance peak 1202 can thus be considered as a ground-truth peak that lacks or is devoid of geometric defects.

An absorbance peak 1204 was experimentally measured by the real-world interferometric spectrometer for the water vapor sample using a large openness setting (e.g., 100/100 openness setting) on its adjustable aperture. As can be seen, although the absorbance peak 1204 exhibits a higher signal-to-noise ratio (e.g., is of a higher or stronger resolution), it is afflicted with geometric defects. Specifically, the absorbance peak 1204 is erroneously shifted to a lower wavenumber than the absorbance peak 1202, is much wider than the absorbance peak 1202, and has heavier and asymmetric tails compared to the absorbance peak 1202.

An absorbance peak 1206 was obtained by deconvolving the absorbance peak 1204 using a one-sided student-t distribution that was implemented in a wavenumber-basis, where the width and tail parameters of that one-sided student-t distribution were iteratively fitted, calibrated, or optimized with respect to the absorbance peak 1202 (e.g., the absorbance peak 1202 was treated as a ground-truth). As can be seen, such wavenumber-basis deconvolution did an adequate job of curing the erroneous shift and misshapenness exhibited by the absorbance peak 1204 (e.g., the absorbance peak 1206 is located at about the same wavenumber as the absorbance peak 1202 and has a very similar shape as the absorbance peak 1202).

An absorbance peak 1208 was obtained by deconvolving the absorbance peak 1204 using a one-sided student-t distribution that was implemented in a wavelength-basis (the graph 1200 was converted to a wavelength-basis, deconvolved, and then subsequently converted back to a wavenumber-basis), where the width and tail parameters of that one-sided student-t distribution were iteratively fitted, calibrated, or optimized with respect to the absorbance peak 1202. As can be seen, such wavelength-basis deconvolution also did an adequate job of curing the erroneous shift and misshapenness exhibited by the absorbance peak 1204 (e.g., the absorbance peak 1208 is located at about the same wavenumber as the absorbance peak 1202 and has a very similar shape as the absorbance peak 1202).

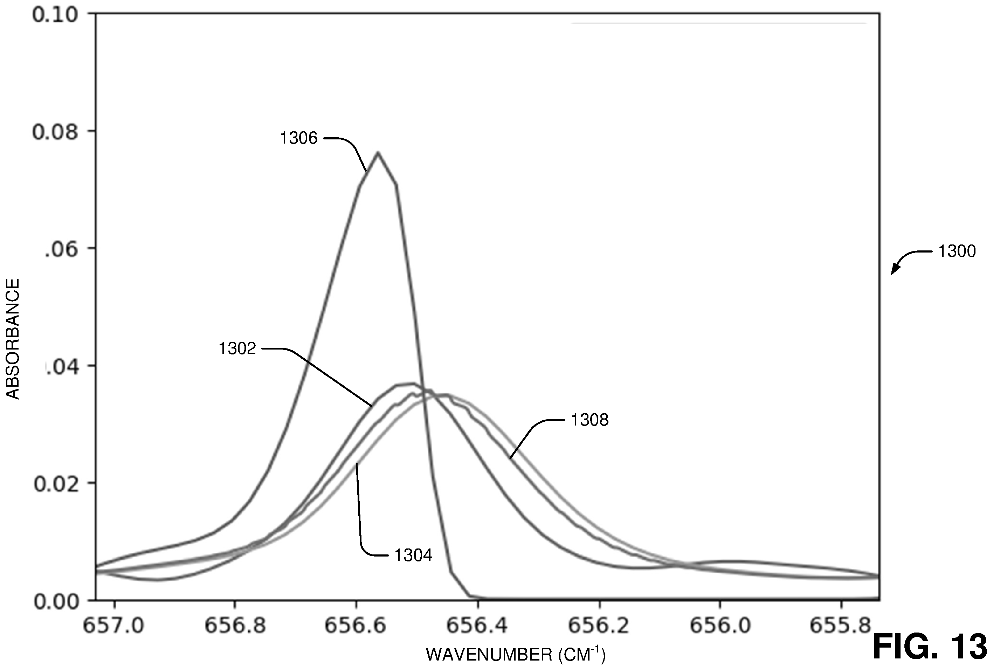

Now, consider FIG. 13. FIG. 13 depicts a graph 1300, which can be considered as a zoomed or cropped view of the portion of the graph 1100 that is denoted by numeral 1102. Note how the graph 1300 spans a very narrow range of wavenumbers (e.g., 657.0 to 655.8).

An absorbance peak 1302 was experimentally measured by the real-world interferometric spectrometer for the water vapor sample using a small openness setting (e.g., 10/100 openness setting) on its adjustable aperture. The absorbance peak 1302 can thus be considered as a ground-truth peak that lacks or is devoid of geometric defects.

An absorbance peak 1304 was experimentally measured by the real-world interferometric spectrometer for the water vapor sample using a large openness setting (e.g., 100/100 openness setting) on its adjustable aperture. As can be seen, although the absorbance peak 1204 exhibits a higher signal-to-noise ratio (e.g., is of a higher or stronger resolution), it is afflicted with geometric defects. Specifically, the absorbance peak 1304 is erroneously shifted to a lower wavenumber than the absorbance peak 1202 and is slightly wider than the absorbance peak 1302.

An absorbance peak 1306 was obtained by deconvolving the absorbance peak 1204 using a one-sided student-t distribution that was implemented in a wavenumber-basis, where the width and tail parameters of that one-sided student-t distribution were whichever values were iteratively fitted, calibrated, or optimized with respect to FIG. 12. As can be seen, such wavenumber-basis deconvolution significantly worsened the location and shape of the absorbance peak 1304 (e.g., the absorbance peak 1306 is utterly distorted and misplaced as compared to the absorbance peak 1302). This is because the geometric effects of deconvolution vary with wavenumber, and the wavenumber-basis deconvolution parameters that were utilized to generate the absorbance peak 1306 were derived from a vastly different wavenumber interval (e.g., those fitted parameter values were derived from peaks located around wavenumber 2336 but were applied to peaks located around wavenumber 656). In order for wavenumber-basis deconvolution to be properly or accurately applied to the absorbance peak 1304, new fitted deconvolution parameter values would have to be iteratively identified using the absorbance peak 1302 as a ground-truth.

In various aspects, an absorbance peak 1308 was obtained by deconvolving the absorbance peak 1304 using a one-sided student-t distribution that was implemented in a wavelength-basis (the graph 1300 was converted to a wavelength-basis, deconvolved, and then subsequently converted back to a wavenumber-basis), where the width and tail parameters of that one-sided student-t distribution were whichever values were iteratively fitted, calibrated, or optimized with respect to FIG. 12. As can be seen, such wavelength-basis deconvolution did an adequate job of tempering or reducing the slight shift and misshapenness exhibited by the absorbance peak 1304 (e.g., the absorbance peak 1308 is located nearer to the absorbance peak 1302 than the absorbance peak 1304 is located; the width of the absorbance peak 1308 is closer to that of the absorbance peak 1302 than the width of the absorbance peak 1304 is).

FIGs. 10-13 can be considered as demonstrating the computational efficiency of wavelength-basis deconvolution of spectra. When a wavenumber-basis is implemented for deconvolution, separate or distinct fitted values of the deconvolution parameters must be independently identified for each narrow wavenumber interval that is desired to be deconvolved. In order to accurately deconvolve an entire spectrum that spans thousands of wavenumbers, wavenumber-basis deconvolution can thus require tens, hundreds, or thousands of separate, distinct, or independent deconvolution parameter fittings. This is certainly burdensome and effort-intensive. In stark contrast, when a wavelength-basis is implemented for deconvolution, there can be no need for separate or distinct fitted values of the deconvolution parameters to be independently identified for respective narrow intervals of a spectrum. Instead, a single set of fitted parameter values can be identified for any portion or any interval of the spectrum, and that single set of fitted parameter values can accurately or reliably remove geometric defects from any portion or interval of the spectrum. This is because the geometric effects of deconvolution vary with evenly-spaced wavenumber but are constant with evenly-spaced wavelength.

This experimental data demonstrates that spectrum deconvolution using a wavelength-basis can be advantageous over spectrum deconvolution using a wavenumber-basis.

Although various embodiments are mainly described and illustrated herein as applying to absorbance spectra, there are mere non-limiting examples for ease of explanation. It should be understood or otherwise appreciated that various embodiments described herein can be applied to any other suitable types of spectra, such as transmittance spectra.

Various non-limiting aspects are described in the following examples.

EXAMPLE 1: A system can comprise a processor that can execute computer-executable components stored in a non-transitory computer-readable memory, wherein the computer-executable components can comprise: an access component that can access an interferometric spectrometer; and a calibration component that can compute at least one fitted value for at least one deconvolution parameter of the interferometric spectrometer, based on a wavenumber-to-wavelength spectrum conversion.

EXAMPLE 2: The system of any preceding example can be implemented, wherein the calibration component can compute the at least one fitted value by performing operations comprising: causing the interferometric spectrometer to scan a reference sample, thereby yielding a first wavenumber-basis spectrum for the reference sample; translating the first wavenumber-basis spectrum into a first wavelength-basis spectrum for the reference sample; deconvolving the first wavelength-basis spectrum with at least one random value for the at least one deconvolution parameter, thereby yielding a first deconvolved wavelength-basis spectrum for the reference sample; and iteratively updating the at least one random value until a similarity between the first deconvolved wavelength-basis spectrum and a ground-truth spectrum associated with the reference sample satisfies a threshold.

EXAMPLE 3: The system of any preceding example can be implemented, wherein the calibration component can perform the deconvolving using a one-sided student-t distribution.

EXAMPLE 4: The system of any preceding example can be implemented, wherein the at least one deconvolution parameter can comprise: a width parameter; a tail parameter; or an spectral shift parameter.

EXAMPLE 5: The system of any preceding example can be implemented, wherein the calibration component can perform the deconvolving using a Richardson-Lucy algorithm.

EXAMPLE 6: The system of any preceding example can be implemented, wherein the interferometric spectrometer can be loaded with a sample, and wherein the computer-executable components can further comprise: an execution component that can: cause the interferometric spectrometer to scan the sample, thereby yielding a second wavenumber-basis spectrum for the sample; translate the second wavenumber-basis spectrum into a second wavelength-basis spectrum for the sample; and deconvolve the second wavelength-basis spectrum with the at least one fitted value for the at least one deconvolution parameter, thereby yielding a second deconvolved wavelength-basis spectrum for the sample.

EXAMPLE 7: The system of any preceding example can be implemented, wherein the execution component can render the second deconvolved wavelength-basis spectrum on an electronic display.

EXAMPLE 8: The system of any preceding example can be implemented, wherein the execution component can: translate the second deconvolved wavelength-basis spectrum into a deconvolved wavenumber-basis spectrum for the sample; and render the deconvolved wavenumber-basis spectrum on an electronic display.

EXAMPLE 9: The system of any preceding example can be implemented, wherein the sample can be chemically different from the reference sample.

In various embodiments, any combination or combinations of examples 1-9 can be implemented.

EXAMPLE 10: A computer-implemented method can comprise: accessing, by a device operatively coupled to a processor, an interferometric spectrometer; and computing, by the device, at least one fitted value for at least one deconvolution parameter of the interferometric spectrometer, based on a wavenumber-to-wavelength spectrum conversion.

EXAMPLE 11: The computer-implemented method of any preceding example can be implemented, wherein the computing the at least one fitted value can comprise: causing, by the device, the interferometric spectrometer to scan a reference sample, thereby yielding a first wavenumber-basis spectrum for the reference sample; translating, by the device, the first wavenumber-basis spectrum into a first wavelength-basis spectrum for the reference sample; deconvolving, by the device, the first wavelength-basis spectrum with at least one random value for the at least one deconvolution parameter, thereby yielding a first deconvolved wavelength-basis spectrum for the reference sample; and iteratively updating, by the device, the at least one random value until a similarity between the first deconvolved wavelength-basis spectrum and a ground-truth spectrum associated with the reference sample satisfies a threshold.

EXAMPLE 12: The computer-implemented method of any preceding example can be implemented, wherein the device can perform the deconvolving using a one-sided student-t distribution.

EXAMPLE 13: The computer-implemented method of any preceding example can be implemented, wherein the at least one deconvolution parameter can comprise: a width parameter; a tail parameter; or an spectral shift parameter.

EXAMPLE 14: The computer-implemented method of any preceding example can be implemented, wherein the device can perform the deconvolving using a Richardson-Lucy algorithm.

EXAMPLE 15: The computer-implemented method of any preceding example can be implemented, wherein the interferometric spectrometer can be loaded with a sample, and further comprising: causing, by the device, the interferometric spectrometer to scan the sample, thereby yielding a second wavenumber-basis spectrum for the sample; translating, by the device, the second wavenumber-basis spectrum into a second wavelength-basis spectrum for the sample; and deconvolving, by the device, the second wavelength-basis spectrum with the at least one fitted value for the at least one deconvolution parameter, thereby yielding a second deconvolved wavelength-basis spectrum for the sample.

EXAMPLE 16: The computer-implemented method of any preceding example can be implemented, further comprising: rendering, by the device, the second deconvolved wavelength-basis spectrum on an electronic display.

EXAMPLE 17: The computer-implemented method of any preceding example can be implemented, further comprising: translating, by the device, the second deconvolved wavelength-basis spectrum into a deconvolved wavenumber-basis spectrum for the sample; and rendering, by the device, the deconvolved wavenumber-basis spectrum on an electronic display.

EXAMPLE 18: The computer-implemented method of any preceding example can be implemented, wherein the sample can be chemically different from the reference sample.

In various embodiments, any combination or combinations of examples 10-18 can be implemented.

EXAMPLE 19: A computer program product for facilitating spectrum deconvolution for interferometric spectrometers can comprise a non-transitory computer-readable memory having program instructions embodied therewith. In various aspects, the program instructions can be executable by a processor to cause the processor to: access an interferometric spectrometer; and compute at least one fitted value for at least one deconvolution parameter of the interferometric spectrometer, based on a wavenumber-to-wavelength spectrum conversion.

EXAMPLE 20: The computer program product of any preceding example can be implemented, wherein the processor can compute the at least one fitted value based on: causing the interferometric spectrometer to scan a reference sample, thereby yielding a first wavenumber-basis spectrum for the reference sample; translating the first wavenumber-basis spectrum into a first wavelength-basis spectrum for the reference sample; deconvolving the first wavelength-basis spectrum with at least one random value for the at least one deconvolution parameter, thereby yielding a first deconvolved wavelength-basis spectrum for the reference sample; and iteratively updating the at least one random value until a similarity between the first deconvolved wavelength-basis spectrum and a ground-truth spectrum associated with the reference sample satisfies a threshold.

In various embodiments, any combination or combinations of examples 19-20 can be implemented.

EXAMPLE 21: In various embodiments, a method for imaging a sample with an interferometric spectrometer can comprise: accessing a reference spectrum acquired from a reference sample; calculating one or more deconvolution parameters of a deconvolution model using the reference spectrum and a known spectrum of the reference sample; acquiring, via the interferometric spectrometer, a sample spectrum from a sample, wherein the sample is chemically different from the reference sample; and generating a deconvoluted sample spectrum by deconvoluting the acquired sample spectrum with the one or more deconvolution parameters.

EXAMPLE 22: The method of any preceding example can be implemented, wherein the calculating the one or more deconvolution parameters of the deconvolution model using the reference spectrum and the known spectrum of the reference sample can include calculating the one or more deconvolution parameters of the deconvolution model based on the reference spectrum that is in a wavelength-basis.

EXAMPLE 23: The method of any preceding example can be implemented, wherein the known spectrum of the reference sample can have a single spectral peak that is different from at least one spectral peak of the sample spectrum.

EXAMPLE 24: The method of any preceding example can be implemented, wherein a distance between the spectral peak of the reference sample and the at least one spectral peak of the sample spectrum can be greater than a threshold wavenumber.

EXAMPLE 25: The method of any preceding example can be implemented, wherein the one or more deconvolution parameters can be not calculated using a spectrum of any other reference sample.

EXAMPLE 26: The method of any preceding example can be implemented, further comprising: acquiring, via the interferometric spectrometer, a second sample spectrum from a second sample; and generating a second deconvoluted sample spectrum by deconvoluting the acquired second sample spectrum.

EXAMPLE 27: The method of any preceding example can be implemented, further comprising: determining sample composition based on the deconvoluted sample spectrum.

EXAMPLE 28: The method of any preceding example can be implemented, further comprising: acquiring, via the interferometric spectrometer, a wavenumber-basis reference spectrum from the reference sample; and converting wavenumber-basis reference spectrum into the reference spectrum that is wavelength-basis.

EXAMPLE 29: The method of any preceding example can be implemented, wherein the deconvolution model can be a one-sided student-t distribution.

EXAMPLE 30: The method of any preceding example can be implemented, wherein the one or more deconvolution parameters can include a width parameter; a tail parameter; or an spectral shift parameter.

EXAMPLE 31: The method of any preceding example can be implemented, further comprising: calculating the one or more deconvolution parameters using a Richardson-Lucy algorithm.

EXAMPLE 32: The method of any preceding example can be implemented, further comprising: displaying the deconvoluted sample spectrum, wherein the displayed deconvoluted sample spectrum includes artificial peaks at one or both edges of the displayed deconvoluted sample spectrum.

EXAMPLE 33: The method of any preceding example can be implemented, further comprising: converting the deconvoluted sample spectrum into a wavenumber-basis spectrum; and displaying the converted deconvoluted sample spectrum.

EXAMPLE 34: The method of any preceding example can be implemented, wherein the deconvoluted sample spectrum includes an artificial peak on each end of the deconvoluted sample spectrum.

In various embodiments, any combination or combinations of examples 21-34 can be implemented.

EXAMPLE 35: In various embodiments, an interferometric spectrometer can: acquire a sample spectrum for a sample; and generate a deconvoluted sample spectrum by deconvoluting the acquired sample spectrum with one or more deconvolution parameters of a deconvolution model, wherein the sample is chemically different from a reference sample for which the one or more deconvolution parameters were calculated.

EXAMPLE 36: The interferometric spectrometer of any preceding example can be implemented, wherein the deconvoluting can be performed in a wavelength-basis.

EXAMPLE 37: The interferometric spectrometer of any preceding example can be implemented, wherein the deconvolution model can be a one-sided student-t distribution.

EXAMPLE 38: The interferometric spectrometer of any preceding example can be implemented, wherein the one or more deconvolution parameter can include a width parameter, a tail parameter, or an spectral shift parameter.

EXAMPLE 39: The interferometric spectrometer of any preceding example can be implemented, wherein the deconvoluting can use a Richardson-Lucy algorithm.

EXAMPLE 40: The interferometric spectrometer of any preceding example can be implemented, wherein the interferometric spectrometer can be a Fourier Transform Infrared spectrometer or a Fourier Transform Raman spectrometer.

In various embodiments, any combination or combinations of examples 35-40 can be implemented.

In various embodiments, any combination or combinations of examples 1-40 can be implemented.

## Claims

1. A method for imaging a sample with an interferometric spectrometer, comprising:
accessing a reference spectrum acquired from a reference sample;
calculating one or more deconvolution parameters using the reference spectrum and a known spectrum of the reference sample;
acquiring, via the interferometric spectrometer, a sample spectrum from a sample, wherein the sample is chemically different from the reference sample; and
generating a deconvoluted sample spectrum by deconvoluting the acquired sample spectrum with the one or more deconvolution parameters.

2. The method of claim 1, wherein the calculating the one or more deconvolution parameters using the reference spectrum and the known spectrum of the reference sample includes:
converting a wavenumber-basis reference spectrum into the reference spectrum that is wavelength-basis; and
calculating the one or more deconvolution parameters based on the reference spectrum that is wavelength-basis.

3. The method of claim 1, wherein the known spectrum of the reference sample has at least a spectral peak that is different from at least one spectral peak of the sample spectrum, and a distance between the spectral peak of the reference sample and the at least one spectral peak of the sample spectrum is greater than a threshold wavenumber.

4. The method of claim 1, further comprising: acquiring the reference spectrum from the reference sample with the interferometric spectrometer.

5. The method of claim 4, further comprising: acquiring the known spectrum of the reference sample with the interferometric spectrometer via a smaller aperture for allowing light entering an interferometer of the interferometric spectrometer, and wherein the reference spectrum is acquired from the reference sample via a larger aperture.

6. The method of claim 4, wherein acquiring the reference spectrum from the reference sample with the interferometric spectrometer includes: acquiring a background spectrum with the interferometric spectrometer and converting the acquired background spectrum into the reference spectrum.

7. The method of claim 6, wherein the reference sample includes carbon dioxide or water.

8. The method of any of previous claims, further comprising:
determining sample composition based on the deconvoluted sample spectrum.

9. The method of any of precious claims, wherein the deconvolution parameters include a width parameter and a tail parameter of a point spread function for deconvoluting the acquired sample spectrum.

10. The method of claim 9, wherein the one or more deconvolution parameters further include a spectral shift, and the deconvoluted sample spectrum is obtained by further shifting a deconvoluted using the point spread function based on the spectral shift.

11. The method of claim 9, further comprising:
calculating the one or more deconvolution parameters using a Richardson-Lucy algorithm.

12. The method of any of previous claims, further comprising:
displaying the deconvoluted sample spectrum, wherein the displayed deconvoluted sample spectrum includes artificial peaks at one or both edges of the displayed deconvoluted sample spectrum.

13. The method of any of previous claims, further comprising:
converting the deconvoluted sample spectrum into a wavenumber-basis spectrum; and displaying the converted deconvoluted sample spectrum.

14. An interferometric spectrometer, comprising:
an interferometer;
an aperture for limiting a light entering the interferometer;
a detector; and
a controller including a processor and a non-transitory memory for storing computer readable instructions, by executing the computer readable instructions in the processor, the interferometric spectrometer is configured to:
acquires a sample spectrum for a sample; and
generates a deconvoluted sample spectrum by deconvoluting the acquired sample spectrum with one or more deconvolution parameters, wherein the one or more deconvolution parameters are calculated using a reference spectrum acquired from a reference sample and a known spectrum of the reference sample.

15. The interferometric spectrometer of claim 14, wherein the interferometric spectrometer is further configured to convert the acquired sample spectrum into wavelength-basis, and wherein deconvoluting the acquired sample spectrum includes deconvoluting the acquired sample spectrum using a point spread function of a one-sided student-t distribution.
